# EUROPEAN PATENT APPLICATION

(11) **EP 4 525 496 A1**
(43) Date of publication of application: **19.03.2025**
(21) Application number: 22941050.1
(22) Date of filing: 09.05.2022
(51) Int. Cl.: H04W 12/041, H04W 12/10, H04W 76/10

(54) **AUTHENTICATION METHOD AND APPARATUS, AND MEDIUM AND CHIP**

(71) Applicant: Beijing Xiaomi Mobile Software Co., Ltd., Beijing 100085 (CN)
(72) Inventor: LIANG, Haoran, Beijing 100085 (CN); LU, Wei, Beijing 100085 (CN)
(74) Representative: Gunzelmann, Rainer
(86) International application number: PCT/CN2022/091815
(87) International publication number: WO 2023/216083

(57) **Abstract**

The present disclosure relates to an authentication method and apparatus, and a medium and a chip. The method comprises: determining, from one or more first entities, a target entity that requests communication; determining a first permission request parameter according to the target entity; sending an application session establishment request message to a first proxy entity according to the first permission request parameter; in response to having received an application session establishment response message, which is sent by the first proxy entity, determining whether a user equipment and the target entity have a first communication permission; and when the user equipment and the target entity have a first communication permission, performing identity authentication by means of the first proxy entity, wherein the application session establishment request message is used for instructing the first proxy entity to determine, according to the first permission request parameter, whether the user equipment and the target entity have a first communication permission, the first entities comprise an entity providing an application function, the first proxy entity comprises an entity providing an authentication function, and the first proxy entity provides an authentication proxy function for the first entities.

## Description

### FIELD

The present disclosure relates to the field of communication, and more particularly to an authentication method, an authentication device, a medium and a chip.

### BACKGROUND

In the wireless communication system, 3GPP (3rd Generation Partnership Project) defines the session security protection function between the User Equipment (UE) and the application function, and proposes an application-based key management method, i.e. authentication and key management for applications based on 3GPP credentials (AKMA).

In the related art, the user equipment can exchange messages with an application function AF entity based on AKMA, and determine the access authority of the user equipment to the application function AF entity, so as to establish a secure session with the application function AF entity, which will increase the load of the application function AF entity and reduce the efficiency of the AF entity.

### SUMMARY

In order to overcome the above problems in the related art, the present disclosure provides an authentication method, an authentication device, a medium and a chip.

According to a first aspect of embodiments of the present disclosure, an authentication method is provided, which is applied to a user equipment, and includes: determining a target entity requesting communication from one or more first entities; determining a first authority request parameter according to the target entity; sending an application session establishment request message to a first proxy entity according to the first authority request parameter, in which the application session establishment request message is configured to instruct the first proxy entity to determine whether the user equipment has a first communication authority with the target entity according to the first authority request parameter, the first entity includes an untrusted entity providing an application function outside a domain of a 3GPP operator, the first proxy entity includes an untrusted entity providing an authentication function outside the domain of the 3GPP operator, and the first proxy entity provides an authentication proxy function for the first entity; determining whether the user equipment has the first communication authority with the target entity in response to receiving an application session establishment response message sent by the first proxy entity; and in case that the user equipment has the first communication authority with the target entity, performing identity authentication through the first proxy entity.

According to a second aspect of embodiments of the present disclosure, an authentication method is provided, which is applied to a first proxy entity, and includes: receiving an application session establishment request message sent by a user equipment, in which the application session establishment request message includes a first authority request parameter, and the application session establishment request message is configured to instruct the first proxy entity to determine whether the user equipment has a first communication authority with a target entity according to the first authority request parameter, in which the target entity is an entity requesting communication determined by the user equipment from one or more first entities, the first entity includes an untrusted entity providing an application function outside a domain of a 3GPP operator, the first proxy entity includes an untrusted entity providing an authentication function outside the domain of the 3GPP operator, and the first proxy entity provides an authentication proxy function for the first entity; determining whether the user equipment has the first communication authority with the target entity according to the first authority request parameter; and in case that the user equipment has the first communication authority with the target entity, sending an application session establishment response message to the user equipment, and performing identity authentication of the user equipment.

According to a third aspect of embodiments of the present disclosure, an authentication method is provided, which is applied to a second entity, and includes: receiving a first key request message sent by a first proxy entity, in which the first key request message includes a second authority request parameter, the second authority request parameter is a parameter determined by the first proxy entity according to a first authority request parameter sent by a user equipment, and the first authority request parameter is configured to instruct the first proxy entity to determine whether the user equipment has a first communication authority with a target entity according to the first authority request parameter, in which the target entity is an entity requesting communication determined by the user equipment from one or more first entities, the first entity includes an untrusted entity providing an application function outside a domain of a 3GPP operator, the first proxy entity includes an untrusted entity providing an authentication function outside the domain of the 3GPP operator, and the first proxy entity provides an authentication proxy function for the first entity; acquiring first pending key information according to the second authority request parameter; and sending a first key response message to the first proxy entity according to the first pending key information.

According to a fourth aspect of embodiments of the present disclosure, an authentication method is provided, which is applied to a third entity, and comprises: receiving a third key request message sent by a second entity, in which the third key request message comprises a third authority request parameter, the third authority request parameter is a parameter determined by the second entity according to a second authority request parameter, the second authority request parameter is a parameter determined by a first proxy entity according to a first authority request parameter sent by a user equipment, the first authority request parameter is configured to instruct the first proxy entity to determine whether the user equipment has a first communication authority with a target entity according to the first authority request parameter, the target entity is an entity requesting communication determined by the user equipment from one or more first entities, the first entity comprises an untrusted entity providing an application function outside a domain of a 3GPP operator, the first proxy entity comprises an untrusted entity providing an authentication function outside the domain of the 3GPP operator, and the first proxy entity provides an authentication proxy function for the first entity; determining whether the user equipment has the first communication authority with the target entity according to the third authority request parameter; acquiring third pending key information in case that the user equipment has the first communication authority with the target entity; and sending a third key response message to the second entity according to the third pending key information, in which the third key response message comprises the third pending key information.

According to a fifth aspect of embodiments of the present disclosure, an authentication method is provided, which is applied to a first entity, one or more first entities are arranged, and the method comprises: communicating with a user equipment in response to receiving an authentication result notification message sent by a first proxy entity, in which the authentication result notification message is configured to indicate that a target entity has a communication authority with the user equipment, the first entity comprises an untrusted entity providing an application function outside a domain of a 3GPP operator, the first proxy entity comprises an untrusted entity providing an authentication function outside the domain of the 3GPP operator, and the first proxy entity provides an authentication proxy function for the first entity.

According to a sixth aspect of embodiments of the present disclosure, an authentication device is provided, which is applied to a user equipment, and comprises: a target entity determining module configured to determine a target entity requesting communication from one or more first entities; a parameter determining module configured to determine a first authority request parameter according to the target entity; a first message sending module configured to send an application session establishment request message to a first proxy entity according to the first authority request parameter, in which the application session establishment request message is configured to instruct the first proxy entity to determine whether the user equipment has a first communication authority with the target entity according to the first authority request parameter, the first entity comprises an untrusted entity providing an application function outside a domain of a 3GPP operator, the first proxy entity comprises an untrusted entity providing an authentication function outside the domain of the 3GPP operator, and the first proxy entity provides an authentication proxy function for the first entity; a first message receiving module configured to determine whether the user equipment has the first communication authority with the target entity in response to receiving an application session establishment response message sent by the first proxy entity; and an authentication module configured to perform identity authentication through the first proxy entity in case that the user equipment has the first communication authority with the target entity.

According to a seventh aspect of embodiments of the present disclosure, an authentication device is provided, which is applied to a first proxy entity, and comprises: a first proxy receiving module configured to receive an application session establishment request message sent by a user equipment, in which the application session establishment request message comprises a first authority request parameter, the application session establishment request message is configured to instruct the first proxy entity to determine whether the user equipment has a first communication authority with a target entity according to the first authority request parameter, the target entity is an entity requesting communication determined by the user equipment from one or more first entities, the first entity comprises an untrusted entity providing an application function outside a domain of a 3GPP operator, the first proxy entity comprises an untrusted entity providing an authentication function outside the domain of the 3GPP operator, and the first proxy entity provides an authentication proxy function for the first entity; a first proxy determining module configured to determine whether the user equipment has the first communication authority with the target entity according to the first authority request parameter; and a first proxy sending module configured to send an application session establishment response message to the user equipment, and perform identity authentication of the user equipment in case that the user equipment has the first communication authority with the target entity.

According to an eighth aspect of embodiments of the present disclosure, an authentication device is provided, which is applied to a second entity, and comprises: a second receiving module configured to receive a first key request message sent by a first proxy entity, in which the first key request message comprises a second authority request parameter, the second authority request parameter is a parameter determined by the first proxy entity according to a first authority request parameter sent by a user equipment, the first authority request parameter is configured to instruct the first proxy entity to determine whether the user equipment has a first communication authority with a target entity according to the first authority request parameter, the target entity is an entity requesting communication determined by the user equipment from one or more first entities, the first entity comprises an untrusted entity providing an application function outside a domain of a 3GPP operator, the first proxy entity comprises an untrusted entity providing an authentication function outside the domain of the 3GPP operator, and the first proxy entity provides an authentication proxy function for the first entity; a second key acquiring module configured to acquire first pending key information according to the second authority request parameter; and a second sending module configured to send a first key response message to the first proxy entity according to the first pending key information.

According to a ninth aspect of embodiments of the present disclosure, an authentication device is provided, which is applied to a third entity, and comprises: a third receiving module configured to receive a third key request message sent by a second entity, in which the third key request message comprises a third authority request parameter, the third authority request parameter is a parameter determined by the second entity according to a second authority request parameter, the second authority request parameter is a parameter determined by a first proxy entity according to a first authority request parameter sent by a user equipment, the first authority request parameter is configured to instruct the first proxy entity to determine whether the user equipment has a first communication authority with a target entity according to the first authority request parameter, the target entity is an entity requesting communication determined by the user equipment from one or more first entities, the first entity comprises an untrusted entity providing an application function outside a domain of a 3GPP operator, the first proxy entity comprises an untrusted entity providing an authentication function outside the domain of the 3GPP operator, and the first proxy entity provides an authentication proxy function for the first entity; a third determining module configured to determine whether the user equipment has the first communication authority with the target entity according to the third authority request parameter; a third key module configured to acquire third pending key information in case that the user equipment has the first communication authority with the target entity; and a third sending module configured to send a third key response message to the second entity according to the third pending key information, in which the third key response message comprises the third pending key information.

According to a tenth aspect of embodiments of the present disclosure, an authentication device is provided, which is applied to a first entity, one or more first entities are arranged, and the device comprises: a first communication module configured to communicate with a user equipment in response to receiving an authentication result notification message sent by a first proxy entity, in which the authentication result notification message is configured to indicate that a target entity has a communication authority with the user equipment, the first entity comprises an untrusted entity providing an application function outside a domain of a 3GPP operator, the first proxy entity comprises an untrusted entity providing an authentication function outside the domain of the 3GPP operator, and the first proxy entity provides an authentication proxy function for the first entity.

According to an eleventh aspect of embodiments of the present disclosure, an authentication device is provided, and includes: a processor; and a memory for storing instructions executable by the processor. The processor is configured to perform the steps of the authentication method according to the first aspect of the present disclosure.

According to a twelfth aspect of embodiments of the present disclosure, an authentication device is provided, and includes: a processor; and a memory for storing instructions executable by the processor. The processor is configured to perform the steps of the authentication method according to the second aspect of the present disclosure.

According to a thirteenth aspect of embodiments of the present disclosure, an authentication device is provided, and includes: a processor; and a memory for storing instructions executable by the processor. The processor is configured to perform the steps of the authentication method according to the third aspect of the present disclosure.

According to a fourteenth aspect of embodiments of the present disclosure, an authentication device is provided, including: a processor; and a memory for storing instructions executable by the processor. The processor is configured to perform the steps of the authentication method according to the fourth aspect of the present disclosure.

According to a fifteenth aspect of embodiments of the present disclosure, an authentication device is provided, and includes: a processor; and a memory for storing instructions executable by the processor. The processor is configured to perform the steps of the authentication method according to the fifth aspect of the present disclosure.

According to a sixteenth aspect of embodiments of the present disclosure, a computer-readable storage medium is provided, on which computer program instructions are stored. The computer program instructions are configured to, when executed by a processor, realize the steps of the authentication method according to the first aspect of the present disclosure.

According to a seventeenth aspect of embodiments of the present disclosure, a computer-readable storage medium is provided, on which computer program instructions are stored. The computer program instructions are configured to, when executed by a processor, realize the steps of the authentication method according to the second aspect of the present disclosure.

According to an eighteenth aspect of embodiments of the present disclosure, a computer-readable storage medium is provided, on which computer program instructions are stored. The computer program instructions are configured to, when executed by a processor, realize the steps of the authentication method according to the third aspect of the present disclosure.

According to a nineteenth aspect of embodiments of the present disclosure, a computer-readable storage medium is provided, on which computer program instructions are stored. The computer program instructions are configured to, when executed by a processor, realize the steps of the authentication method according to the fourth aspect of the present disclosure.

According to a twentieth aspect of embodiments of the present disclosure, a computer-readable storage medium is provided, on which computer program instructions are stored. The computer program instructions are configured to, when executed by a processor, realize the steps of the authentication method according to the fifth aspect of the present disclosure.

According to a twenty-first aspect of embodiments of the present disclosure, a chip is provided, and includes a processor and an interface. The processor is configured to read instructions to perform the steps of the authentication method according to the first aspect of the present disclosure.

According to a twenty-second aspect of embodiments of the present disclosure, a chip is provided, and includes a processor and an interface. The processor is configured to read instructions to perform the steps of the authentication method according to the second aspect of the present disclosure.

According to a twenty-third aspect of embodiments of the present disclosure, a chip is provided, and includes a processor and an interface. The processor is configured to read instructions to perform the steps of the authentication method according to the third aspect of the present disclosure.

According to a twenty-fourth aspect of embodiments of the present disclosure, a chip is provided, and includes a processor and an interface. The processor is configured to read instructions to perform the steps of the authentication method according to the fourth aspect of the present disclosure.

According to a twenty-fifth aspect of embodiments of the present disclosure, a chip is provided, and includes a processor and an interface. The processor is configured to read instructions to perform the steps of the authentication method according to the fifth aspect of the present disclosure.

The technical solutions provided by the embodiments of the present disclosure can include the following beneficial effects. The target entity requesting communication is determined from one or more first entities, the first authority request parameter is determined according to the target entity, the application session establishment request message is sent to the first proxy entity according to the first authority request parameter, it is determined whether the user equipment has the first communication authority with the target entity in response to receiving the application session establishment response message sent by the first proxy entity, and in case that the user equipment has the first communication authority with the target entity, the identity authentication is performed through the first proxy entity. The application session establishment request message is used to instruct the first proxy entity to determine whether the user equipment has the first communication authority with the target entity according to the first authority request parameter. The first entity includes an untrusted entity providing an application function outside the domain of the 3GPP operator, the first proxy entity includes an untrusted entity providing an authentication function outside the domain of the 3GPP operator, and the first proxy entity provides an authentication proxy function for the first entity. In this way, for the untrusted first entity outside the domain of the 3GPP operator, the first proxy entity determines whether the user equipment has the first communication authority with the first entity, and performs the identity authentication of the user equipment in case that the user equipment has the first communication authority, so that part of the functions of the first entity can be realized through the first proxy entity, thereby reducing the load of the first entity and improving the efficiency of the first entity. Moreover, the user equipment realizes the authority authentication and identity authentication with one or more first entities through the unified first proxy entity, which also reduces the complexity of authentication of the user equipment and improves the efficiency of the user equipment.

It is to be understood that both the foregoing general description and the following detailed description are illustrative and explanatory only, and are not restrictive of the present disclosure.

### BRIEF DESCRIPTION OF THE DRAWINGS

The accompanying drawings, which are incorporated in and constitute a part of this specification, illustrate embodiments consistent with the present disclosure and together with the description, serve to explain the principles of the present disclosure.
Fig. 1 is a schematic diagram of a communication system to which embodiments of the present disclosure are applicable according to an illustrative embodiment.
Fig. 2 is a schematic diagram of a 5G communication system according to an illustrative embodiment.
Fig. 3 is a flow chart of an authentication method according to an illustrative embodiment.
Fig. 4 is a flow chart of an authentication method according to an illustrative embodiment.
Fig. 5 is a flow chart of an authentication method according to an illustrative embodiment.
Fig. 6 is a flow chart of an authentication method according to an illustrative embodiment.
Fig. 7 is a flow chart of an authentication method according to an illustrative embodiment.
Fig. 8 is a flow chart of an authentication method according to an illustrative embodiment.
Fig. 9 is a flow chart of an authentication method according to an illustrative embodiment.
Fig. 10 is a flow chart of an authentication method according to an illustrative embodiment.
Fig. 11 is a flow chart of an authentication method according to an illustrative embodiment.
Fig. 12 is a flow chart of an authentication method according to an illustrative embodiment.
Fig. 13 is a block diagram of an authentication device according to an illustrative embodiment.
Fig. 14 is a block diagram of an authentication device according to an illustrative embodiment.
Fig. 15 is a block diagram of an authentication device according to an illustrative embodiment.
Fig. 16 is a block diagram of an authentication device according to an illustrative embodiment.
Fig. 17 is a block diagram of an authentication device according to an illustrative embodiment.
Fig. 18 is a block diagram of an authentication device according to an illustrative embodiment.
Fig. 19 is a block diagram of an authentication device according to an illustrative embodiment.
Fig. 20 is a block diagram of an authentication device according to an illustrative embodiment.

### DETAILED DESCRIPTION

Reference will now be made in detail to illustrative embodiments, examples of which are illustrated in the accompanying drawings. When the following description refers to the drawings, unless otherwise indicated, the same numbers in different drawings indicate the same or similar elements. The implementations described in the following illustrative embodiments do not represent all implementations consistent with the present disclosure. Rather, they are merely examples of devices and methods consistent with some aspects of the present disclosure as detailed in the appended claims.

It should be noted that all the actions of obtaining signals, information or data in the present disclosure are carried out under the premise of complying with the corresponding data protection laws and policies of the country where the present disclosure is and obtaining authorization from the owner of the corresponding device.

In the present disclosure, terms such as "first" and "second" are used to distinguish similar objects without necessarily being understood as a specific order or precedence. In addition, in the description with reference to the drawings, the same reference numerals in different drawings indicate the same elements unless otherwise specified.

In the description of the present disclosure, unless otherwise specified, "a plurality of" means two or more, and other quantifiers are similar to this. The expression "at least one of the following items" or other similar expressions refer to any combination of these items, including any combination of singular items or plural items. For example, at least one of a, b, or c can mean: a, b, c, a-b, a-c, b-c, or a-b-c, where a, b, and c can be singular or plural; "and/or" is an association relationship that describes the associated objects, which means that there can be three kinds of relationships, for example, A and/or B can mean that A exists alone, A and B exist at the same time, and B exists alone, where A and B can be singular or plural.

Although the operations are described in a specific order in the drawings in the embodiments of the present disclosure, it should not be construed as requiring that these operations be performed in the specific order or serial order shown, or that all the operations shown be performed, to obtain the desired results. In certain circumstances, multitasking and parallel processing may be beneficial.

In the related art, the user equipment can exchange messages with an application function AF entity based on AKMA, and determine the access authority of the user equipment to the application function AF entity, so as to establish a secure session with the application function AF entity. However, the message interaction caused by a plurality of user equipment will increase the load of the application function AF entity and reduce the efficiency of the application function AF entity. Moreover, when there are a plurality of application function AF entities in the network, the UE directly exchange messages with the AF to determine the access authority, which will also reduce the efficiency for the UE.

In order to solve the above problems, the present disclosure provides an authentication method, an authentication device, a medium and a chip.

First, the implementation environment of the embodiment of the present disclosure will be introduced.

The embodiment of the present disclosure can be applied to a 4G (fourth Generation) network system, such as a Long Term Evolution (LTE) system, or it can also be applied to a 5G (fifth Generation) network system, such as an access network adopting a New Radio Access Technology (New RAT), a Cloud Radio Access Network (CRAN) and other communication systems.

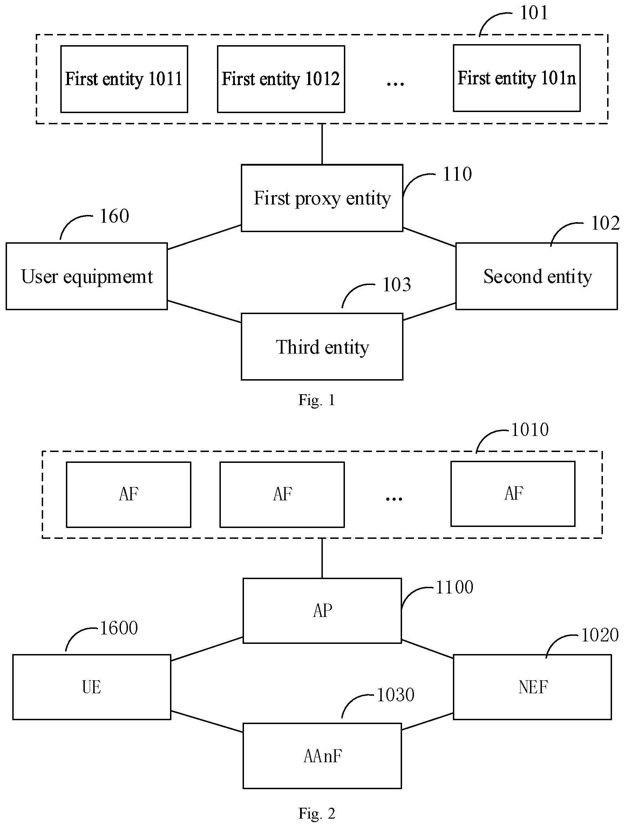

Fig. 1 is a schematic diagram of a communication system to which the embodiment of the present disclosure is applicable according to an illustrative embodiment. It should be noted that the embodiment of the present disclosure is not limited to the system shown in Fig. 1, and in addition, the entities in Fig. 1 may be hardware, software divided in terms of function or a combination of the two. The entity shown in Fig. 1 may be an entity in any communication network architecture, and the communication network may be a 4G network, a 5G network or a 6G network, etc.

As shown in Fig. 1, the communication system may include a first entity 101, a second entity 102, a third entity 103, a first proxy entity 110 and a user equipment 160, the first entity 101 may be one or more, for example, the first entity 101 may include a first entity 1011, a first entity 1012, ..., a first entity 101n, and the like. The first proxy entity 110 may be connected with the one or more first entities 101 (for example, through a wired network, a wireless network or a combination of both), and the first proxy entity may be connected with the second entity, the second entity may be connected with the third entity, and the user equipment may be connected with the first proxy entity and the third entity.

In some embodiments, the first entity 101 may include an entity providing an application function, the first proxy entity 110 may include an entity providing an authentication proxy function, the second entity 102 may include an entity providing a network exposure function, and the third entity 103 may include an entity providing an AKMA authorization and an application key derivation function, for example, the third entity 103 may be a functional entity providing an AKMA anchor function and authenticating the communication authority between the user equipment and the first entity.

In some embodiments, the first entity may include an untrusted entity providing an application function outside a domain of a 3GPP operator, and the first proxy entity may include an untrusted entity providing an authentication function outside the domain of the 3GPP operator. The first proxy entity provides an authentication proxy function for the first entity, and one or more first entities may be provided.

For example, the first entity may include an application function AF entity or a services capability server/application server SCS/AS; the first proxy entity may include an AKMA Authentication Proxy AP entity; the second entity may include a Network Exposure Function NEF entity or a Service Capability Exposure Function SCEF entity; and the third entity may include an AKMA anchor function AAnF entity.

Fig. 2 is a schematic diagram of a 5G communication system according to an illustrative embodiment. As shown in Fig. 2, the communication system is a specific application of the communication system shown in Fig. 1 in a 5G network. The communication system may include an AF entity 1010, an AP entity 1100, a NEF entity 1020, and a User Equipment UE 1600.

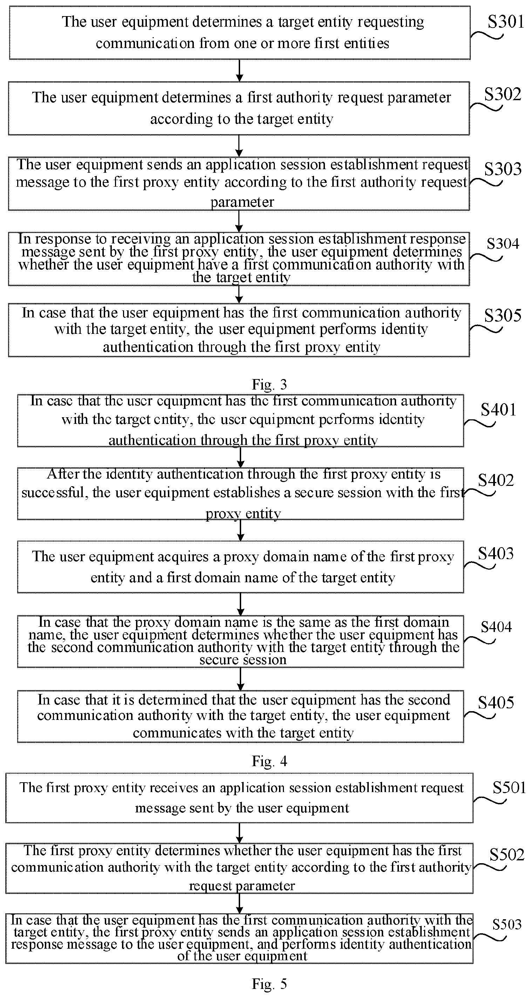

Fig. 3 shows an authentication method according to an illustrative embodiment, which can be applied to the user equipment in the above communication system. As shown in Fig. 3, the method may include the following steps.

In step S301, the user equipment determines a target entity requesting communication from one or more first entities.

For example, the first entity may include an entity providing an application function, such as an application function AF entity. The user equipment can determine the AF entity requesting communication according to the user's functional requirements.

In step S302, the user equipment determines a first authority request parameter according to the target entity.

In some embodiments, a first target entity identifier of the target entity can be acquired first, and the first authority parameter can be determined according to the first target entity identifier.

For example, the first target entity identifier may include one or more of a Fully Qualified Domain Name (FQDN), an Internet Protocol (IP) address and a Port Number of the target entity.

In some embodiments, the first authority request parameter can be acquired according to the first target entity identifier and a user equipment identifier representing the identity of the user equipment.

The user equipment identifier may include a key identifier A-KID corresponding to the user equipment, the key identifier A-KID may be generated according to the hardware information of the user equipment and the registration information sent by the communication system when the user equipment registers to access the communication system, and the key identifier A-KID may uniquely identify one user equipment in the communication system.

For example, the first target entity identifier and the key identifier A-KID corresponding to the user equipment can be used as the first authority request parameters.

In step S303, the user equipment sends an application session establishment request message to the first proxy entity according to the first authority request parameter.

The application session establishment request message can be used to instruct the first proxy entity to determine whether the user equipment has a first communication authority with the target entity according to the first authority request parameter.

In some embodiments, the first proxy entity is connected with one or more first entities. For example, a unified first proxy entity can be set in one trust domain or one edge node, and the first proxy entity can be connected with each first entity in the trust domain or the edge node. In the case that the user equipment requests to communicate with the target entity in the trust domain or the edge node, an application session establishment request message can be sent to the first proxy entity.

In some embodiments, the first entity may include an untrusted entity providing an application function outside the domain of the 3GPP operator, the first proxy entity may include an untrusted entity providing an authentication function outside the domain of the 3GPP operator, the first proxy entity provides an authentication proxy function for the first entity, and one or more first entities may be provided.

In some embodiments, the user equipment may be pre-configured with a proxy domain name (e.g., FQDN) of the first proxy entity, and through the FQDN, the user equipment can conduct message interaction or data transmission with the first proxy entity.

In step S304, in response to receiving an application session establishment response message sent by the first proxy entity, the user equipment determines whether the user equipment have a first communication authority with the target entity.

In some embodiments, the user equipment may determine that the user equipment has the first communication authority with the target entity after receiving the application session establishment response message.

On the contrary, if the user equipment does not receive the application session establishment response message within a preset time, it can be determined that the user equipment does not have the first communication authority with the target entity.

In some other embodiments, the user equipment may determine that the user equipment has the first communication authority with the target entity after the user equipment receives the application session establishment response message, and the application session establishment response message contains success indication information.

On the contrary, if the application session establishment response message received by the user equipment does not contain the success indication information or contains failure indication information, it can be determined that the user equipment does not have the first communication authority with the target entity. The success indication information can be any indication information set in advance.

In some other embodiments, the user equipment may determine that the user equipment has the first communication authority with the target entity when the user equipment receives the application session establishment response message, and the application session establishment response message does not contain the failure indication information.

On the contrary, if the application session establishment response message received by the user equipment contains the failure indication information, it can be determined that the user equipment does not have the first communication authority with the target entity. The failure indication information can be any error code set in advance.

In step S305, in case that the user equipment has the first communication authority with the target entity, the user equipment performs identity authentication through the first proxy entity.

For example, the user equipment can generate an entity key K_{AF} corresponding to the target entity according to the FQDN of the target entity, and perform the identity authentication with the first proxy entity according to the entity key K_{AF}.

It should be noted that the way for the user equipment to perform the identity authentication can refer to the implementation in the related art, for example, the identity authentication can be performed according to the entity key information corresponding to the target entity, or the identity authentication can be performed according to the user key information corresponding to the user equipment and the entity key information corresponding to the target entity, which is not limited in the present disclosure.

By adopting the above method, the target entity requesting communication is determined from one or more first entities, the first authority request parameter is determined according to the target entity, the application session establishment request message is sent to the first proxy entity according to the first authority request parameter, it is determined whether the user equipment has the first communication authority with the target entity in response to receiving the application session establishment response message sent by the first proxy entity, and in case that the user equipment has the first communication authority with the target entity, the identity authentication is performed through the first proxy entity. The application session establishment request message is used to instruct the first proxy entity to determine whether the user equipment has the first communication authority with the target entity according to the first authority request parameter; the first entity includes the untrusted entity providing an application function outside the domain of the 3GPP operator, the first proxy entity includes the untrusted entity providing an authentication function outside the domain of the 3GPP operator, and the first proxy entity provides an authentication proxy function for the first entity. In this way, for the untrusted first entity outside the domain of the 3GPP operator, the first proxy entity determines whether the user equipment has the first communication authority with the first entity, and performs the identity authentication of the user equipment in case that the user equipment has the first communication authority, so that part of the functions of the first entity can be realized through the first proxy entity, thereby reducing the load of the first entity and improving the efficiency of the first entity. Moreover, the user equipment realizes the authority authentication and identity authentication with one or more first entities through the unified first proxy entity, which also reduces the complexity of authentication of the user equipment and improves the efficiency of the user equipment.

In some embodiments, the first communication authority may include one or more of the following authorities.

Authority 1: the user equipment has an access authority to the target entity.

Authority 2: the user equipment has an access authority to the first proxy entity.

Authority 3: the first proxy entity has a proxy authority to the target entity.

Authority 4: the target entity has an acquisition authority to a user identification of the user equipment.

For example, it may be determined that the user equipment has the first communication authority with the target entity in case that it is determined that the user equipment has the access authority to the target entity; it can also be determined that the user equipment has the first communication authority with the target entity in case that it is determined that the user equipment has the access authority to the first proxy entity and the first proxy entity has the proxy authority to the target entity; and it can also be determined that the user equipment has the first communication authority with the target entity in case that it is determined that the user equipment has the access authority to the target entity, the user equipment has the access authority to the first proxy entity, and the first proxy entity has the proxy authority to the target entity.

In some embodiments, the user equipment having the first communication authority with the target entity may include that the user equipment has the access authority to the first proxy entity, and the first proxy entity has the proxy authority to the target entity. For example, in case that the FQDN of the first proxy entity is the same as that of the target entity, the first communication authority can be used.

In some other embodiments, the user equipment having the first communication authority with the target entity may include that the user equipment has the access authority to the target entity, the user equipment has the access authority to the first proxy entity, and the first proxy entity has the proxy authority to the target entity. For example, in case that the FQDN of the first proxy entity is different from that of the target entity, the first communication authority can be used.

In some embodiments, the first entity may include an untrusted application function AF entity outside the domain of the 3GPP operator or an untrusted application server SCS/AS entity outside the domain of the 3GPP operator. The first proxy entity may include an untrusted authentication proxy AP entity outside the domain of the 3GPP operator.

In this way, the user equipment can communicate with the AF entities outside the operator domain through the AP.

In some embodiments, after the identity authentication through the first proxy entity is successful, the user equipment can communicate with the target entity.

For example, the user equipment can communicate with the target entity directly or through the first proxy entity, for example, the communication message between the user equipment and the target entity is forwarded through the first proxy entity.

In some other embodiments, after the identity authentication through the first proxy entity is successful, the user equipment can also determine whether a proxy domain name of the first proxy entity is the same as a first domain name of the target entity, and can communicate with the target entity in case that the proxy domain name is different from the first domain name.

On the contrary, in case that the proxy domain name is the same as the first domain name, it can be further determined whether the user equipment has a second communication authority with the target entity through the secure session between the user equipment and the proxy entity. With the second communication authority, communication can be performed with the target entity.

It should be noted that the proxy domain name may be the fully qualified domain name FQDN corresponding to the first proxy entity, and the first domain name may be the fully qualified domain name FQDN corresponding to the target entity. In some scenarios, the first proxy entity and the target entity can use the same FQDN, but different IP addresses or port numbers. In this scenario, the first communication authority can indicate that the user equipment has the access authority to the FQDN, but not necessarily indicate that the user equipment has the access authority to the target entity corresponding to the IP address or port number. At this time, it can be further determined whether the user equipment has the second communication authority with the target entity through the secure session between the user equipment and the proxy entity.

Fig. 4 shows an authentication method according to an illustrative embodiment, which can be applied to the user equipment. As shown in Fig. 4, the method may include the following steps.

In step S401, in case that the user equipment has the first communication authority with the target entity, the user equipment performs identity authentication through the first proxy entity.

In step S402, after the identity authentication through the first proxy entity is successful, the user equipment establishes a secure session with the first proxy entity.

For example, the secure session may be a transport layer security (TLS) session, through which confidentiality and data integrity can be achieved for the communication between the user equipment and the first proxy entity.

In step S403, the user equipment acquires a proxy domain name of the first proxy entity and a first domain name of the target entity.

In some embodiments, the proxy domain name may be the fully qualified domain name FQDN corresponding to the first proxy entity, and the first domain name may be the fully qualified domain name FQDN corresponding to the target entity.

In step S404, in case that the proxy domain name is the same as the first domain name, the user equipment determines whether the user equipment has the second communication authority with the target entity through the secure session.

In step S405, in case that it is determined that the user equipment has the second communication authority with the target entity, the user equipment communicates with the target entity.

Similarly, the user equipment can communicate with the target entity directly or through the first proxy entity, for example, the communication message between the user equipment and the target entity is forwarded through the first proxy entity.

In this way, by authenticating the first communication authority and the second communication authority, it can also be determined that the user equipment has the access authority to the target entity in case that the FQDN of the first proxy entity is the same as that of the target entity, thereby further enhancing security.

In some embodiments, determining whether the user equipment has the second communication authority with the target entity through the secure session in step S404 may include the following steps.

Firstly, the user equipment sends a target entity service request message to the first proxy entity through the secure session.

For example, the target entity service request message may include a second target entity identifier, which is a protected entity identifier acquired by the user equipment according to the first target entity identifier. The target entity service request message is used to instruct the first proxy entity to determine whether the user equipment has the second communication authority with the target entity according to the second target entity identifier.

In some embodiments, the second target entity identifier is an identifier determined after protecting the first target entity identifier corresponding to the target entity according to the requirements of the secure session (such as the TLS session).

In some other embodiments, the first target entity identifier can also be directly used as the second target entity identifier, and the second target entity identifier can be transmitted through the secure session, so as to protect the first target entity identifier and prevent the entity identifier from being tampered with during transmission.

Then, in response to receiving a target entity service response message sent by the first proxy entity, the user equipment determines whether the user equipment has the second communication authority with the target entity.

In some embodiments, the user equipment may determine that the user equipment has the second communication authority with the target entity in case that the user equipment receives the target entity service response message.

On the contrary, in case that the user equipment does not receive the target entity service response message within a preset time, it can be determined that the user equipment does not have the second communication authority with the target entity.

In some other embodiments, the user equipment may determine that the user equipment has the second communication authority with the target entity in case that the user equipment receives the target entity service response message, and the target entity service response message contains success indication information.

On the contrary, in case that the target entity service response message received by the user equipment does not contain the success indication information or contains failure indication information, it can be determined that the user equipment does not have the second communication authority with the target entity. The success indication information can be any indication information set in advance.

In some other embodiments, the user equipment may determine that the user equipment has the second communication authority with the target entity in case that the user equipment receives the target entity service response message, and the target entity service response message does not contain the failure indication information.

On the contrary, in case that the target entity service response message received by the user equipment contains the failure indication information, it can be determined that the user equipment does not have the second communication authority with the target entity. The failure indication information can be any error code set in advance.

In this way, the user equipment can determine whether the user equipment has the second communication authority with the target entity through the secure session.

In some embodiments, the second communication authority may include one or more of the following authorities.

Authority 6: the user equipment has an access authority to the target entity.

Authority 7: the first proxy entity has a proxy authority to the target entity.

Authority 8: the target entity has an acquisition authority to the user identifier of the user equipment.

In this way, it can be determined whether the user equipment has the second communication authority with the target entity through the secure session between the user equipment and the first proxy entity, thus further improving the reliability of authentication.

Fig. 5 shows an authentication method according to an illustrative embodiment, which can be applied to the first proxy entity in the communication system. As shown in Fig. 5, the method may include the following steps.

In step S501, the first proxy entity receives an application session establishment request message sent by the user equipment.

The application session establishment request message includes a first authority request parameter, and the application session establishment request message is used for instructing the first proxy entity to determine whether the user equipment has a first communication authority with a target entity according to the first authority request parameter, the target entity is an entity requesting communication that is determined from one or more first entities by the user equipment, and the first entity may include an untrusted entity providing an application function outside the 3GPP operator domain. The first proxy entity may include an untrusted entity providing an authentication function outside the domain of the 3GPP operator, the first proxy entity provides an authentication proxy function for the first entity, and one or more first entities may be provided.

In step S502, the first proxy entity determines whether the user equipment has the first communication authority with the target entity according to the first authority request parameter.

In this way, for the untrusted first entity outside the domain of the 3GPP operator, the first proxy entity determines whether the user equipment has the first communication authority with the first entity, and performs the identity authentication of the user equipment in case that the user equipment has the first communication authority with the first entity, so that part of the functions of the first entity can be realized through the first proxy entity, thereby reducing the load of the first entity and improving the efficiency of the first entity. Moreover, the user equipment realizes the authority authentication and identity authentication with one or more first entities through the unified first proxy entity, which also reduces the complexity of authentication of the user equipment and improves the efficiency of the user equipment.

In some embodiments, the first proxy entity can determine whether the user equipment has the first communication authority with the target entity by a key request message interaction with the second entity, which for example may include the following steps.

First, the first proxy entity determines a second authority request parameter according to the first authority request parameter.

In some embodiments, the first authority request parameter and a proxy entity identifier corresponding to the first proxy entity can be used as the second authority request parameter. For example, if the first authority request parameter includes the first target entity identifier of the target entity and the key identifier A-KID corresponding to the user equipment, the second authority request parameter may include the first target entity identifier, the key identifier A-KID and the proxy entity identifier corresponding to the first proxy entity.

In some other embodiments, the first authority request parameter can be used as the second authority request parameter.

Secondly, the first proxy entity sends a first key request message to the second entity.

For example, the second entity may include an entity providing a network exposure function. The first key request message may include the second authority request parameter.

Thirdly, the first proxy entity receives a first key response message sent by the second entity.

The first key response message may include first pending key information, and the first pending key information is key information acquired by the second entity according to the second authority request parameter.

In some embodiments, the first pending key information may include an application key K_{AF} corresponding to the target entity.

In some other embodiments, the first pending key information may include the application key K_{AF} and a key expiration time (K_{AF} expiration time) corresponding to the target entity.

In some embodiments, the first key response message may also include a first user identifier of the user equipment, the first user identifier may be any identifier for representing the user equipment, for example, it may be a generic public subscription identifier GPSI corresponding to the user equipment.

Finally, the first proxy entity determines whether the user equipment has the first communication authority with the target entity according to the first pending key information.

For example, in case that the first pending key information includes the application key K_{AF} corresponding to the target entity, it can be determined that the user equipment has the first communication authority with the target entity. On the contrary, in case that the first pending key information does not include the application key K_{AF} corresponding to the target entity, or in case that the first pending key information does not include the valid application key K_{AF}, or in case that the first pending key information is not received within a preset time, it can be determined that the user equipment does not have the first communication authority with the target entity.

In this way, the first proxy entity can determine whether the user equipment has the first communication authority with the target entity by interacting with the second entity.

In some other embodiments, in case that the first proxy entity stores the communication authority policy of the user equipment, it can be directly determined whether the user equipment has the first communication authority with the target entity according to the first authority request parameter.

In step S503, in case that the user equipment has the first communication authority with the target entity, the first proxy entity sends an application session establishment response message to the user equipment, and performs identity authentication of the user equipment.

In some embodiments, the first proxy entity may indicate that the user equipment has the first communication authority with the target entity by sending the application session establishment response message. On the contrary, by not sending the application session establishment response message, the first proxy entity may indicate that the user equipment does not have the first communication authority with the target entity.

In some other embodiments, the first proxy entity may include success indication information in the application session establishment response message, and it is indicated through the success indication information that the user equipment has the first communication authority with the target entity. On the contrary, by not including the success indication information in the application session establishment response message, it is indicated that the user equipment does not have the first communication authority with the target entity. The success indication information can be any indication information set in advance.

In some other embodiments, in case that the user equipment does not have the first communication authority with the target entity, the first proxy entity may include failure indication information in the application session establishment response message, and it is indicated that the user equipment does not have the first communication authority with the target entity. On the contrary, in case that the user equipment has the first communication authority with the target entity, the first proxy entity may indicate that the user equipment has the first communication authority with the target entity by not including the failure indication information in the application session establishment response message.

By adopting the above method, the authentication of the communication authority between the user equipment and the first entity can be realized based on the first proxy entity, so that the problem of excessive load caused by the authority authentication of the first entity can be reduced.

In some embodiments, the first communication authority may include one or more of the following authorities.

Authority 1: the user equipment has an access authority to the target entity.

Authority 2: the user equipment has an access authority to the first proxy entity.

Authority 3: the first proxy entity has a proxy authority to the target entity.

Authority 4: the target entity has an acquisition authority to the user identifier of the user equipment.

In some embodiments, the first entity may include an untrusted application function AF entity outside the domain of the 3GPP operator or an untrusted application server SCS/AS entity outside the domain of the 3GPP operator. The first proxy entity may include an untrusted authentication proxy AP entity outside the domain of the 3GPP operator. The second entity may include a network exposure function NEF entity or a service capability exposure function SCEF entity.

In some embodiments, in case that the identity authentication of the user equipment through the first proxy entity is successful, the first proxy entity may send an authentication result notification message to the target entity.

The authentication result notification message is used to indicate that the target entity has the communication authority with the user equipment.

Further, the authentication result notification message may also include the first user identifier corresponding to the user equipment. For example, in case that the first key response message includes the first user identifier corresponding to the user equipment, the first proxy entity may send the first user identifier to the target entity through the authentication result notification message.

It should be noted that the first user identifier can be any identifier used to represent the user equipment, for example, it can be a generic public subscription identifier GPSI corresponding to the user equipment.

In this way, the first proxy entity can verify the communication authority between the user equipment and the first entity, and instruct the user equipment to communicate with the first entity in case that the user equipment has the communication authority with the first entity.

In some other embodiments, in case that the identity authentication of the user equipment through the first proxy entity is successful, the first proxy entity can acquire the proxy domain name of the first proxy entity and the first domain name of the target entity; in case that the proxy domain name is different from the first domain name, the authentication result notification message is sent to the target entity, so as to indicate that the target entity has the communication authority or communicates with the user equipment.

On the contrary, in case that the proxy domain name is the same as the first domain name, the first proxy entity temporarily does not send the authentication result notification message to the target entity, but waits for whether the user equipment has the second communication authority with the target entity, and then sends the authentication result notification message to the target entity after determining that the user equipment has the second communication authority with the target entity.

For example, the first proxy entity may further determine whether the user equipment has the second communication authority with the target entity according to the target entity service request message sent by the user equipment.

It should also be noted that the proxy domain name may be the fully qualified domain name FQDN corresponding to the first proxy entity, and the first domain name may be the fully qualified domain name FQDN corresponding to the target entity. In some scenarios, the first proxy entity and the target entity can use the same FQDN, but different IP addresses or port numbers. In this scenario, the first communication authority can indicate that the user equipment has the access authority to the FQDN, but not necessarily indicate that the user equipment has the access authority to the target entity corresponding to the IP address or port number. At this time, it can be further determined whether the user equipment has the second communication authority with the target entity through the secure session between the user equipment and the proxy entity.

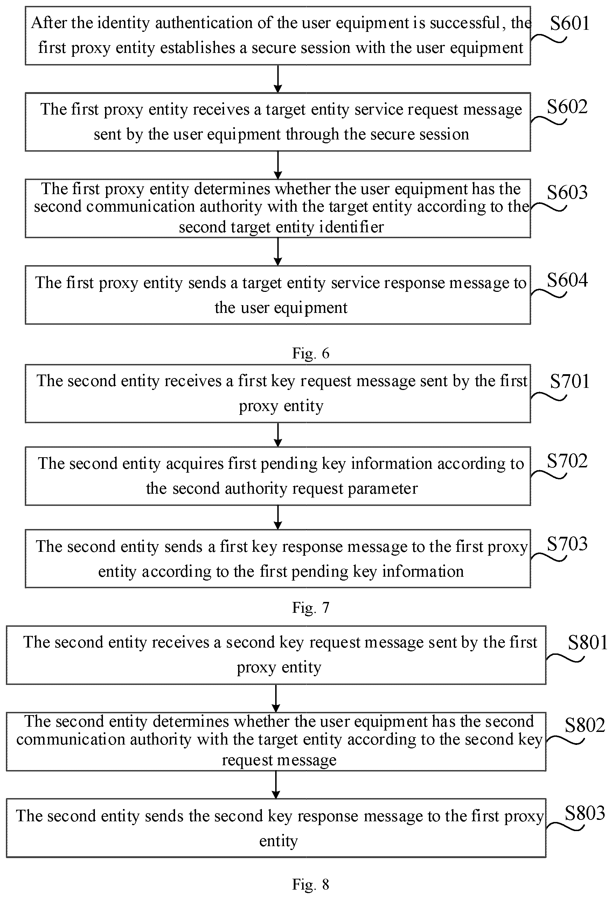

Fig. 6 shows an authentication method according to an illustrative embodiment, which can be applied to the first proxy entity. As shown in Fig. 6, the method may include the following steps.

In step S601, after the identity authentication of the user equipment is successful, the first proxy entity establishes a secure session with the user equipment.

For example, the secure session may be a transport layer security (TLS) session, through which confidentiality and data integrity can be achieved for the communication between the first proxy entity and the user equipment.

In step S602, the first proxy entity receives a target entity service request message sent by the user equipment through the secure session.

The target entity service request message includes a second target entity identifier, which is a protected entity identifier acquired by the user equipment according to the first target entity identifier of the target entity, and the target entity service request message is a message sent by the user equipment when determining that the proxy domain name of the first proxy entity is the same as the first domain name of the target entity.

In step S603, the first proxy entity determines whether the user equipment has the second communication authority with the target entity according to the second target entity identifier.

In some embodiments, it can be determined that the user equipment has the second communication authority with the target entity in case that the second target entity identifier is the same as the first target entity identifier.

In some other embodiments, in case that the second target entity identity is different from the first target entity identity, the first proxy entity can determine whether the user equipment has the second communication authority with the target entity by interacting with the key request message of the second entity, which for example may include the following steps.

Firstly, the first proxy entity sends a second key request message to the second entity.

Secondly, the first proxy entity receives a second key response message sent by the second entity.

Finally, the first proxy entity determines whether the user equipment has the second communication authority with the target entity according to the second key response message.

For example, the second key request message may include a key identifier A-KID, a second target entity identifier and a proxy entity identifier corresponding to the first proxy entity. The second key request message can be used to instruct the second entity to determine whether the user equipment has the second communication authority with the target entity according to the second key request message.

In some embodiments, the second key request message may include an authorization indication parameter. The authorization indication parameter can be used to instruct the second entity to determine whether the user equipment has the second communication authority with the target entity according to the second key request message. Similarly, the second key response message may also include the authorization indication parameter to indicate that the second key response message is a response to the second key request message.

In some embodiments, the second key response message may also include an authorization result parameter. The authorization result parameter can be used to indicate authorization success or authorization failure. The first proxy entity determines whether the user equipment has the second communication authority with the target entity according to the authorization result parameter. For example, in case that the authorization result parameter indicates the authorization success, it can be determined that the user equipment has the second communication authority with the target entity; on the contrary, in case that the authorization result parameter indicates the authorization failure or the second key response message does not include the authorization result parameter, it can be determined that the user equipment does not have the second communication authority with the target entity.

In step S604, the first proxy entity sends a target entity service response message to the user equipment.

The target entity service response message is used to indicate whether the user equipment has the second communication authority with the target entity.

In some embodiments, the first proxy entity may indicate that the user equipment has the second communication authority with the target entity by sending the target entity service response message. On the contrary, by not sending the target entity service response message, the first proxy entity may indicate that the user equipment does not have the second communication authority with the target entity.

In some other embodiments, the first proxy entity may contain success indication information in the target entity service response message, and indicate that the user equipment has the second communication authority with the target entity through the success indication information. On the contrary, by not containing the success indication information in the target entity service response message, the first proxy entity may indicate that the user equipment does not have the second communication authority with the target entity. The success indication information can be any indication information set in advance.

In some other embodiments, in case that the user equipment does not have the second communication authority with the target entity, the first proxy entity may contain failure indication information in the target entity service response message, and indicate that the user equipment does not have the second communication authority with the target entity. On the contrary, in case that the user equipment has the second communication authority with the target entity, the first proxy entity may indicate that the user equipment has the second communication authority with the target entity by not containing the failure indication information in the target entity service response message. The failure indication information can be any error code set in advance.

In this way, the first proxy entity can determine whether the user equipment has the second communication authority with the target entity through the secure session, and send the authority authentication result to the target device.

In some embodiments, the second communication authority may include one or more of the following authorities.

Authority 6: the user equipment has an access authority to the target entity.

Authority 7: the first proxy entity has a proxy authority to the target entity.

Authority 8: the target entity has an acquisition authority to the user identifier of the user equipment.

In this way, it can be determined whether the user equipment has the second communication authority with the target entity through the secure session between the user equipment and the first proxy entity, further improving the reliability of authentication.

In some embodiments, the first proxy entity may send an authentication result notification message to the target entity in case that it is determined that the user equipment has the second communication authority with the target entity according to the second key response message.

The authentication result notification message is used to indicate that the target entity has the communication authority with the user equipment.

Further, the authentication result notification message may also include the first user identifier corresponding to the user equipment. For example, in case that the second key response message includes the first user identifier corresponding to the user equipment, the first proxy entity may send the first user identifier to the target entity through the authentication result notification message.

It should be noted that the first user identifier can be any identifier used to represent the user equipment, for example, it can be a generic public subscription identifier GPSI corresponding to the user equipment.

In this way, the first proxy entity can verify the second communication authority between the user equipment and the first entity through the secure session, further improving the reliability of authentication, and can instruct the user equipment to communicate with the first entity when the user equipment has the second communication authority with the first entity.

Fig. 7 shows an authentication method according to an illustrative embodiment, which can be applied to the second entity. As shown in Fig. 7, the method may include the following steps.

In step S701, the second entity receives a first key request message sent by the first proxy entity.

The first key request message includes a second authority request parameter, which is determined by the first proxy entity according to the first authority request parameter sent by the user equipment, the first authority request parameter is used for instructing the first proxy entity to determine whether the user equipment has the first communication authority with the target entity according to the first authority request parameter, and the target entity is an entity requesting communication determined by the user equipment from one or more first entities. The first entity may include an untrusted entity providing an application function outside the domain of the 3GPP operator, and the first proxy entity may include an untrusted entity providing an authentication function outside the domain of the 3GPP operator. The first proxy entity provides the authentication proxy function for the first entity, and one or more first entities may be provided.

In step S702, the second entity acquires first pending key information according to the second authority request parameter.

In some embodiments, the second entity can determine whether the user equipment has the first communication authority with the target entity by a key request message interaction with the third entity, and acquire the first pending key information, which for example may include the following steps.

Firstly, the second entity determines a third authority request parameter according to the second authority request parameter.

Secondly, the second entity sends a third key request message to the third entity according to the third authority request parameter. For example, the third key request message may include the third authority request parameter.

Thirdly, the second entity receives a third key response message sent by the third entity. For example, the third key response message includes third pending key information, and the third pending key information is the key information acquired in case that the third entity determines that the user equipment has the first communication authority with the target entity according to the third authority request parameter.

Finally, the second entity acquires the first pending key information according to the third pending key information.

In this way, the second entity can acquire the first pending key information by interacting with the third entity.

In some embodiments, the second entity may include an entity providing a network exposure function, and the third entity may include an entity providing an AKMA authorization and an application key deduction function.

In some embodiments, the second authority request parameter may include the proxy entity identifier corresponding to the first proxy entity, and the second entity may determine the third entity with authority to serve the first proxy entity according to a policy (such as configuration parameters) set in advance.

In some embodiments, the second authority request parameter may include a key identifier A-KID corresponding to the user equipment, a first target entity identifier corresponding to the target entity and a proxy entity identifier corresponding to the first proxy entity. The second entity may take the second authority request parameter as the third authority request parameter.

In some embodiments, the third pending key information includes entity key information corresponding to the target entity, and the second entity may take the entity key information corresponding to the target entity as the first pending key information.

In some embodiments, the entity key information corresponding to the target entity may include the application key K_{AF} corresponding to the target entity.

In some other embodiments, the entity key information corresponding to the target entity may include the application key K_{AF} and the key expiration time (K_{AF} expiration time) corresponding to the target entity.

In some embodiments, the third key response message may further include a second user identifier of the user equipment, and the second entity may determine the first user identifier according to the second user identifier, and send a first key response message to the first proxy entity according to the first pending key information and the first user identifier. For example, the first pending key information and the first user identifier may be included in the first key response message.

In some embodiments, the second user identifier may be an identifier that represents the user equipment within the domain of the 3GPP operator. The first user identifier may be an identifier that represents the user equipment outside the domain of the 3GPP operator. For example, the second user identifier may be a subscription permanent identifier SUPI corresponding to the user equipment. The first user identifier may be a generic public subscription identifier GPSI corresponding to the user equipment.

The second entity can determine the first user identifier corresponding to the second user identifier according to a preset identifier correspondence. The preset identifier correspondence includes a correspondence between the second user identifier and the first user identifier.

In this way, the second entity can acquire the first user identifier corresponding to the user equipment by interacting with the third entity.

In some other embodiments, in case that the second entity stores the communication authority policy of the user equipment, it is possible to directly determine whether the user equipment has the first communication authority with the target entity according to the second authority request parameter, and to acquire the first pending key information.

In step S703, the second entity sends a first key response message to the first proxy entity according to the first pending key information.

For example, the first key response message may include the first pending key information, so that the first proxy entity can determine whether the user equipment has the first communication authority with the target entity according to the first pending key information.

In this way, the second entity can determine whether the user equipment have the first communication authority with the target entity, and inform the first proxy entity through the first pending key information.

In some embodiments, the first communication authority includes one or more of the following.

The user equipment has the access authority to the target entity.

The user equipment has the access authority to the first proxy entity.

The first proxy entity has the proxy authority to the target entity.

The target entity has the acquisition authority to the user identifier of the user equipment.

In some embodiments, the first entity may include an untrusted application function AF entity outside the domain of the 3GPP operator or an untrusted application server SCS/AS entity outside the domain of the 3GPP operator. The first proxy entity may include an untrusted authentication proxy AP entity outside the domain of the 3GPP operator. The second entity may include a network exposure function NEF entity or a service capability exposure function SCEF entity.

Fig. 8 shows an authentication method according to an illustrative embodiment, which can be applied to the second entity. As shown in Fig. 8, after sending the first key response message to the first proxy entity, the method may further include the following steps.

In step S801, the second entity receives a second key request message sent by the first proxy entity.

The second key request message is a message sent by the first proxy entity to the second entity in case that it is determined that the second target entity identifier is different from the first target entity identifier corresponding to the target entity. The second target entity identifier is a protected entity identifier acquired by the user equipment according to the first target entity identifier of the target entity.

In step S802, the second entity determines whether the user equipment has the second communication authority with the target entity according to the second key request message.

In some embodiments, the second entity can determine whether the user equipment has the second communication authority with the target entity by a key request message interaction with the third entity, which for example may include the following steps.

Firstly, the second entity sends a fourth key request message to the third entity.

Secondly, the second entity receives a fourth key response message sent by the third entity.

Finally, the second entity determines whether the user equipment has the second communication authority with the target entity according to the fourth key response message.

For example, the second key request message may include a key identifier A-KID, a second target entity identifier and a proxy entity identifier corresponding to the first proxy entity. The fourth key request message may also include a key identifier A-KID, a second target entity identifier and a proxy entity identifier. The fourth key request message can be used to instruct the third entity to determine whether the user equipment has the second communication authority with the target entity according to the key identifier A-KID, the second target entity identifier and the proxy entity identifier.

In some embodiments, both the second key request message and the fourth key request message may include an authorization indication parameter, which may be used to instruct the third entity to determine whether the user equipment has the second communication authority with the target entity according to the fourth key request message. Similarly, the second key response message may also include an authorization indication parameter to indicate that the second key response message is a response to the second key request message. The fourth key response message may also include an authorization indication parameter, which is used to indicate that the fourth key response message is a response to the fourth key request message.

In some embodiments, the fourth key response message may also include an authorization result parameter. The authorization result parameter can be used to indicate authorization success or authorization failure.

In step S803, the second entity sends the second key response message to the first proxy entity.

The second key response message is used to inform the first proxy entity whether the user equipment has the second communication authority with the target entity.

In some embodiments, the second entity may also generate the second key response message according to the authorization result parameter in the fourth key response message. For example, the authorization result parameter is contained in the second key response message. In this way, the authorization result parameter can be forwarded to the first proxy entity, so that the first proxy entity can determine whether the user equipment has the second communication authority with the target entity according to the authorization result parameter.

In some embodiments, the fourth key response message may also include the second user identifier corresponding to the user equipment, and the second entity may determine the first user identifier according to the second user identifier, and send the second key response message to the first proxy entity according to the first user identifier. For example, the first user identifier may be included in the second key response message.

In some embodiments, the second user identifier may be an identifier that represents the user equipment within the domain of the 3GPP operator. The first user identifier may be an identifier that represents the user equipment outside the domain of the 3GPP operator. For example, the second user identifier may be a subscription permanent identifier SUPI corresponding to the user equipment. The first user identifier may be a generic public subscription identifier GPSI corresponding to the user equipment.

The second entity can determine the first user identifier corresponding to the second user identifier according to a preset identifier correspondence. The preset identifier correspondence includes a correspondence between the second user identifier and the first user identifier.

In some embodiments, the second communication authority includes one or more of the following.

The user equipment has the access authority to the target entity.

The first proxy entity has the proxy authority to the target entity.

The target entity has the acquisition authority to the user identifier of the user equipment.

In some embodiments, the third entity may include an AKMA anchor function AAnF entity.

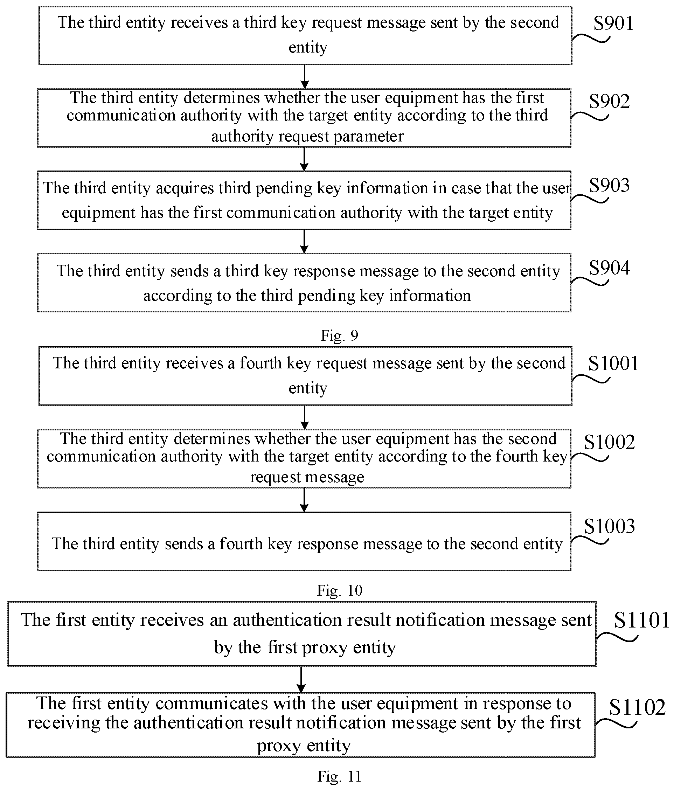

Fig. 9 shows an authentication method according to an illustrative embodiment, which can be applied to the third entity. As shown in Fig. 9, the method may include the following steps.

In step S901, the third entity receives a third key request message sent by the second entity.

The third key request message includes a third authority request parameter, the third authority request parameter is a parameter determined by the second entity according to a second authority request parameter, the second authority request parameter is a parameter determined by the first proxy entity according to a first authority request parameter sent by the user equipment, and the first authority request parameter is used for instructing the first proxy entity to determine whether the user equipment has the first communication authority with the target entity according to the first authority request parameter. The target entity is an entity requesting communication determined by the user equipment from one or more first entities. The first entity may include an untrusted entity providing an application function outside the domain of the 3GPP operator, and the first proxy entity may include an untrusted entity providing an authentication function outside the domain of the 3GPP operator. The first proxy entity provides an authentication proxy function for the first entity, and one or more first entities may be provided.

In step S902, the third entity determines whether the user equipment has the first communication authority with the target entity according to the third authority request parameter.

In some embodiments, the third authority request parameter may include a proxy entity identifier corresponding to the first proxy entity. After receiving the third authority request parameter, the third entity can determine whether the third entity has the authority to serve the first proxy entity according to a preset policy. The preset policy may include pre-configured parameters.

In case that it is determined that the third entity has the authority to serve the first proxy entity, it is determined whether the user equipment has the first communication authority with the target entity according to the third authority request parameter.

On the contrary, in case that it is determined that the third entity does not have the authority to serve the first proxy entity, the flow may be terminated without checking whether the user equipment has the first communication authority with the target entity. At this time, the third entity can send a failure indication to the second entity, so that the second entity can handle the failure accordingly; or, the third entity also directly stops processing and does not send any message.

In some embodiments, the third authority request parameter includes a key identifier A-KID corresponding to the user equipment, a first target entity identifier of the target entity and a proxy entity identifier corresponding to the first proxy entity. In this step, the way to determine whether the user equipment has the first communication authority with the target entity includes one or more of the following.

Way 1: according to the key identifier A-KID and the first target entity identifier, it is determined whether the user equipment has the access authority to the target entity.

Way 2: according to the key identifier A-KID and the proxy entity identifier, it is determined whether the user equipment has the access authority to the first proxy entity.

Way 3: according to the proxy entity identifier and the first target entity identifier, it is determined whether the first proxy entity has the proxy authority to the target entity.

Way 4: according to the key identifier A-KID and the second target entity identifier, it is determined whether the target entity has the acquisition authority to the user identifier of the user equipment.

Way 5: according to the key identifier A-KID, it is determined whether the user equipment has the authority to use the AKMA.

In some embodiments, the third entity may determine that the user equipment has the first communication authority with the target entity, in case that it is determined that the user equipment has the access authority to both the first proxy entity and the target entity, and the first proxy entity has the proxy authority to the target entity.

In some other embodiments, the third entity may determine that the user equipment has the first communication authority with the target entity, in case that it is determined that the user equipment has the access authority to the target entity and the first proxy entity has the proxy authority to the target entity.

In step S903, the third entity acquires third pending key information in case that the user equipment has the first communication authority with the target entity.

For example, the third pending key information can be acquired according to the entity key information corresponding to the target entity.

In some embodiments, the entity key information corresponding to the target entity may include the application key K_{AF} corresponding to the target entity.

In some other embodiments, the entity key information corresponding to the target entity may include the application key K_{AF} and the key expiration time (K_{AF} expiration time) corresponding to the target entity.

In step S904, the third entity sends a third key response message to the second entity according to the third pending key information.

For example, the third key response message may include the third pending key information, so that the second entity can acquire the first pending key information according to the third pending key information and send the first pending key information to the first proxy entity. The first proxy entity can determine whether the user equipment has the first communication authority with the target entity according to the first pending key information. The third key response message may include the third pending key information.

In this way, the third entity can determine whether the user equipment has the first communication authority with the target entity, and inform the second entity through the third pending key information.

In some embodiments, the third key response message may also include a second user identifier of the user equipment. For example, the third entity may acquire the second user identifier corresponding to the user equipment, and send the third key response message to the second entity according to the third pending key information and the second user identifier.

The third entity may also send the third pending key information and the second user identifier corresponding to the user equipment to the second entity through the third key response message, in case that it is determined that the target entity has the authority to acquire the user identifier.

In some embodiments, the second user identifier may be an identifier that represents the user equipment within the domain of the 3GPP operator. For example, the second user identifier may be a subscription permanent identifier SUPI corresponding to the user equipment.

In some embodiments, the first entity may include an untrusted application function AF entity outside the domain of the 3GPP operator or an untrusted application server SCS/AS entity outside the domain of the 3GPP operator. The first proxy entity may include an untrusted authentication proxy AP entity outside the domain of the 3GPP operator. The second entity may include a network exposure function NEF entity or a service capability exposure function SCEF entity. The third entity may include an AKMA anchor function AAnF entity.

Fig. 10 shows an authentication method according to an illustrative embodiment, which can be applied to the third entity. As shown in Fig. 10, after sending the third key response message to the second entity, the method may further include the following steps.

In step S1001, the third entity receives a fourth key request message sent by the second entity.

In step S1002, the third entity determines whether the user equipment has the second communication authority with the target entity according to the fourth key request message.

In step S 1003, the third entity sends a fourth key response message to the second entity.

The fourth key response message is used to inform the second entity whether the user equipment has the second communication authority with the target entity.

In some embodiments, the fourth key request message may include a proxy entity identifier corresponding to the first proxy entity. After receiving the fourth key request message, the third entity can determine whether the third entity has the authority to serve the first proxy entity according to a preset policy. The preset policy may include pre-configured parameters.

In case that it is determined that the third entity has the authority to serve the first proxy entity, it is determined whether the user equipment has the second communication authority with the target entity according to the fourth key request message.

On the contrary, in case that it is determined that the third entity does not have the authority to serve the first proxy entity, the flow may be terminated without checking whether the user equipment has the first communication authority with the target entity. At this time, the third entity may send a failure indication to the second entity, so that the second entity can handle the failure accordingly; or, the third entity also directly stops processing and does not send any message.

In some embodiments, the fourth key request message may include a key identifier A-KID, a second target entity identifier and a proxy entity identifier corresponding to the first proxy entity. The second target entity identifier is a protected entity identifier acquired by the user equipment according to a first target entity identifier of the target entity. The way to determine whether the user equipment has the second communication authority with the target entity in step S1002 may include one or more of the following.

Way 6: according to the key identifier A-KID and the second target entity identifier, it is determined whether the user equipment has the access authority to the target entity.

Way 7: according to the proxy entity identifier and the second target entity identifier, it is determined whether the first proxy entity has the proxy authority the target entity.

Way 8: according to the key identifier A-KID and the second target entity identifier, it is determined whether the target entity has the acquisition authority to the user identifier of the user equipment.

In some embodiments, the third entity may determine that the user equipment has the second communication authority with the target entity, in case that it is determined that the user equipment has the access authority to the target entity and the first proxy entity has the proxy authority to the target entity.

In some embodiments, the fourth key request message includes an authorization indication parameter, and the authorization indication parameter is used to instruct the third entity to determine whether the user equipment has the second communication authority with the target entity according to the fourth key request message. Similarly, the fourth key response message may also include an authorization indication parameter, and the authorization indication parameter is used to indicate that the fourth key response message is a response to the fourth key request message.

In some embodiments, the fourth key response message may also include an authorization result parameter. The authorization result parameter can be used to indicate authorization success or authorization failure. For example, the third entity may determine a value of the authorization result parameter according to whether the user equipment has the second communication authority with the target entity. For example, the third entity may set the authorization result parameter as authorization success (for example, 1), in case that it is determined that the user equipment has the second communication authority with the target entity, and set the value of the authorization result parameter as authorization failure (for example, 0), in case that it is determined that the user equipment does not have the second communication authority with the target entity.

In some other embodiments, the third entity may indicate that the user equipment does not have the second communication authority with the target entity by not containing the authorization result information in the fourth key response message. For example, in case that the third entity determines that the user equipment does not have the second communication authority with the target entity, the authorization result information may not be contained in the fourth key response message. On the contrary, in case that it is determined that the user equipment has the second communication authority with the target entity, the authorization result information may be contained in the fourth key response message.

In some embodiments, the fourth key response message may also include a second user identifier corresponding to the user equipment. For example, the third entity may send the fourth key response message to the second entity according to the second user identifier corresponding to the user equipment, in case that it is determined that the target entity has the authority to acquire the user identifier. The second user identifier may be a subscription permanent identifier SUPI corresponding to the user equipment.

Fig. 11 shows an authentication method according to an illustrative embodiment, which can be applied to the first entity. As shown in Fig. 11, the method may further include the following steps.

In step S1101, the first entity receives an authentication result notification message sent by the first proxy entity.

In step S1102, the first entity communicates with the user equipment in response to receiving the authentication result notification message sent by the first proxy entity.

The authentication result notification message is used to indicate that the target entity has the communication authority with the user equipment, the first proxy entity is connected with the first entity, and both the first entity and the first proxy entity are untrusted functional entities outside the domain of the 3GPP operator.

It should be noted that the first entity may wait for the user equipment to initiate communication, and the first entity may also initiate communication with the user equipment on its own initiative, which is not limited in the present disclosure.

In some embodiments, the authentication result notification message includes a first user identifier of the user equipment. The first user identifier may be an identifier that represents the user equipment outside the domain of the 3GPP operator. For example, the first user identifier is a generic public subscription identifier GPSI corresponding to the user equipment.

In some embodiments, the first entity includes an untrusted application function AF entity outside the domain of the 3GPP operator or an untrusted application server SCS/AS entity outside the domain of the 3GPP operator. The first proxy entity includes an untrusted authentication proxy AP entity outside the domain of the 3GPP operator.

In this way, the first entity can determine whether the user equipment has the first communication authority with the first entity according to the authentication result notification message of the first proxy entity, thereby reducing the load of the first entity and improving the efficiency of the first entity.

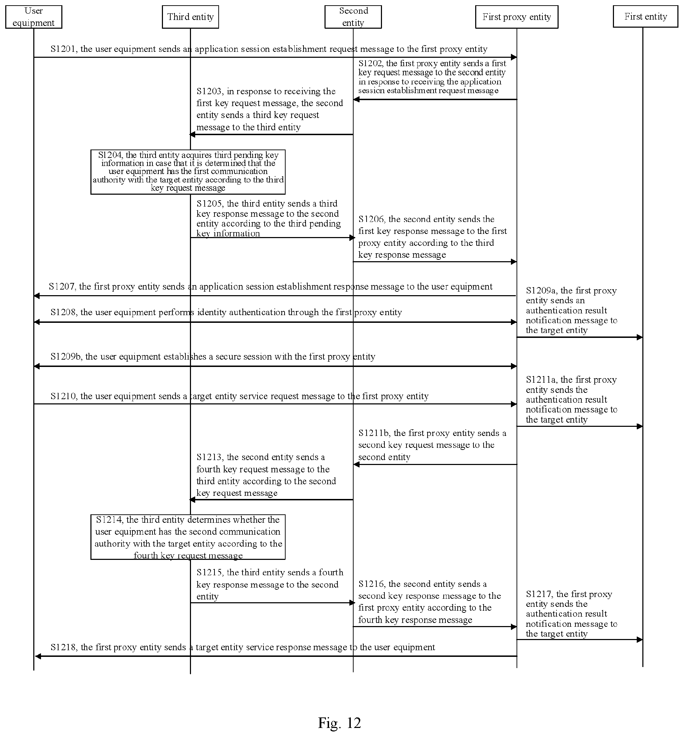

Fig. 12 shows an authentication method according to an illustrative embodiment. As shown in Fig. 12, the method may include the following steps.

In step S1201, the user equipment sends an application session establishment request message to the first proxy entity.

For example, the application session establishment request message may include a first authority request parameter, which may include a key identifier A-KID of the user equipment and a first target entity identifier Target AF ID of the target entity. The target entity may be an entity requesting communication determined by the user equipment from one or more first entities.

In some embodiments, the user equipment can acquire the key identifier A-KID through a preset function entity in the communication system, which may include an authentication service function AUSF entity.

In step S1202, the first proxy entity sends a first key request message to the second entity in response to receiving the application session establishment request message.

The first key request message may include a second authority request parameter.

In some embodiments, the first proxy entity may receive the application session establishment request message sent by the user equipment, and determine the second authority request parameter according to the first authority request parameter in the application session establishment request message.

For example, in case that the first authority request parameter includes the key identifier A-KID of the user equipment and the first target entity identifier Target AF ID of the target entity, it can be determined that the second authority request parameter includes the key identifier A-KID, the first target entity identifier Target AF ID and the proxy entity identifier of the first proxy entity.

In step S1203, in response to receiving the first key request message, the second entity sends a third key request message to the third entity.

The third key request message may include a third authority request parameter.

In some embodiments, the second entity may receive the first key request message sent by the first proxy entity, and determine the third authority request parameter according to the second authority request parameter in the first key request message.

For example, the second authority request parameter can be directly used as the third authority request parameter. For example, in case that the second authority request parameter includes the key identifier A-KID, the first target entity identifier Target AF ID and the proxy entity identifier of the first proxy entity, the key identifier A-KID, the first target entity identifier Target AF ID and the proxy entity identifier of the first proxy entity can be used as the third authority request parameter.

In step S1204, the third entity acquires third pending key information in case that it is determined that the user equipment has the first communication authority with the target entity according to the third key request message.

The third entity can authenticate the communication authority of the user equipment and the target entity based on a preset authority policy to determine whether the user equipment has the first communication authority with the target entity.

In some embodiments, the way for the third entity to determine whether the user equipment has the first communication authority with the target entity may include one or more of the following.

Way 1: according to the key identifier A-KID and the first target entity identifier, it is determined whether the user equipment has the access authority to the target entity.

Way 2: according to the key identifier A-KID and the proxy entity identifier, it is determined whether the user equipment has the access authority to the first proxy entity.

Way 3: according to the proxy entity identifier and the first target entity identifier, it is determined whether the first proxy entity has the proxy authority to the target entity.

Way 4: according to the key identifier A-KID and the second target entity identifier, it is determined whether the target entity has the acquisition authority to the user identifier of the user equipment.

Way 5: according to the key identifier A-KID, it is determined whether the user equipment has the authority to use the AKMA.

In some other embodiments, the third entity may determine that the user equipment has the first communication authority with the target entity, in case that it is determined that the user equipment has the access authority to the target entity and the first proxy entity has the proxy authority to the target entity. For example, the third entity may determine whether the user equipment has the first communication authority with the target entity through the following steps.

In step S11, according to the proxy entity identifier and the first target entity identifier, it is determined whether the first proxy entity has the proxy authority to the target entity.

In case that it is determined that the first proxy entity does not have the proxy authority to the target entity, it is directly determined that the user equipment does not have the first communication authority with the target entity, and step S12 is not executed. On the contrary, in case that it is determined that the first proxy entity has the proxy authority to the target entity, step S12 continues to be executed.

In step S12, according to the key identifier A-KID and the first target entity identifier, it is determined whether the user equipment has the access authority to the target entity.

In case that it is determined that the user equipment does not have the access authority to the target entity, it is directly determined that the user equipment does not have the first communication authority with the target entity, and step S13 is not executed. On the contrary, in case that it is determined that the user equipment has the access authority to the target entity, step S13 continues to be executed.

In step S13, according to the key identifier A-KID, it is determined whether the user equipment has the authority to use the AKMA.

In case that it is determined that the user equipment has the authority to use the AKMA, it can be determined that the user equipment has the first communication authority with the target entity. On the contrary, in case that it is determined that the user equipment does not have the authority to use the AKMA, it can be determined that the user equipment does not have the first communication authority with the target entity.

It should be noted that the third pending key information may include entity key information corresponding to the target entity.

In some embodiments, the entity key information corresponding to the target entity may include the application key K_{AF} corresponding to the target entity.

In some other embodiments, the entity key information corresponding to the target entity may include the application key K_{AF} and the key expiration time (K_{AF} expiration time) corresponding to the target entity.

In step S1205, the third entity sends a third key response message to the second entity according to the third pending key information.

For example, the third key response message may include the application key K_{AF} and the key expiration time (K_{AF} expiration time) corresponding to the target entity.

In some embodiments, the third key response message may further include a second user identifier of the user equipment, which may be an identifier that represents the user equipment within the domain of the 3GPP operator. For example, the second user identifier may be a subscription permanent identifier SUPI corresponding to the user equipment.

In step S1206, the second entity sends the first key response message to the first proxy entity according to the third key response message.

For example, the first key response message may include the application key K_{AF} and the key expiration time (K_{AF} expiration time) corresponding to the target entity.

In case that the third key response message includes the second user identifier (such as SUPI) of the user equipment, the second entity may acquire the first user identifier (such as GPSI) according to the second user identifier (such as SUPI) and include the first user identifier in the first key response message.

In step S 1207, the first proxy entity sends an application session establishment response message to the user equipment.

In case that the first proxy entity acquires the application key K_{AF} in the first key response message, it can be determined that the user equipment has the first communication authority with the target entity. At this time, the first proxy entity can send an application session establishment response message to the user equipment.

In step S1208, the user equipment performs identity authentication through the first proxy entity.

The user equipment can perform the identity authentication through the first proxy entity in case that it is determined that the user equipment has the first communication authority with the target entity. For example, the user equipment can generate the entity key K_{AF} corresponding to the target entity according to the FQDN of the target entity, and perform the identity authentication with the first proxy entity according to the entity key K_{AF}.

In step S1209a, the first proxy entity sends an authentication result notification message to the target entity.

In case that the first key response message includes the first user identifier (e.g., SUPI) of the user equipment, the first proxy entity may include the first user identifier in the authentication result notification message, so that the target application can acquire the identifier information of the user equipment.

In some embodiments, in case that the identity authentication of the user equipment through the first proxy entity is successful, the first proxy entity may send the authentication result notification message to the target entity (step S1209a is executed, while step S1209b and subsequent steps do not continue to be executed).

In some other embodiments, in case that the identity authentication of the user equipment through the first proxy entity is successful, the first proxy entity can acquire the proxy domain name of the first proxy entity and the first domain name of the target entity. In case that the proxy domain name is different from the first domain name, the authentication result notification message is sent to the target entity (step S1209a step is executed, while step S1209b and subsequent steps do not continue to be executed), so as to indicate that the target entity has the communication authority or communicates with the user equipment.

In some other embodiments, in case that the proxy domain name is the same as the first domain name, the first proxy entity may temporarily not send the authentication result notification message to the target entity, but waits for whether the user equipment has the second communication authority with the target entity, and then sends the authentication result notification message to the target entity after determining that the user equipment has the second communication authority with the target entity. That is, step S1209a is not executed, while step S1209b and subsequent steps continue to be executed.

In step S1209b, the user equipment establishes a secure session with the first proxy entity.

The secure session may include a TLS session.

In step S1210, the user equipment sends a target entity service request message to the first proxy entity.

The target entity service request message includes a second target entity identifier, which is a protected entity identifier acquired by the user equipment according to the first target entity identifier of the target entity.

In some embodiments, the target entity service request message may include the key identifier A-KID and the second target entity identifier.

In some embodiments, in case that the second target entity identifier is the same as the first target entity identifier, it can be determined that the user equipment has the second communication authority with the target entity, then the authentication result notification message can be sent to the target entity, and a target entity service response message can be sent to the user equipment. That is, steps S1211a and S1218 are executed, and steps S1211b to S1217 need not be executed.

In some other embodiments, in case that the second target entity identifier is different from the first target entity identifier, the first proxy entity can determine whether the user equipment has the second communication authority with the target entity by a key request message interaction with the second entity. That is, step S1211a is not executed, and step S1211b and subsequent steps continue to be executed.

In step S1211a, the first proxy entity sends the authentication result notification message to the target entity.

In step S1211b, the first proxy entity sends a second key request message to the second entity.

In some embodiments, the second key request message may include the key identifier A-KID, the second target entity identifier and the proxy entity identifier corresponding to the first proxy entity. The second key request message can be used to instruct the second entity to determine whether the user equipment has the second communication authority with the target entity according to the second key request message.

In some embodiments, the second key request message may further include an authorization indication parameter, which may be used to instruct the second entity to determine whether the user equipment has the second communication authority with the target entity according to the second key request message.

In step S1213, the second entity sends a fourth key request message to the third entity according to the second key request message.

In some embodiments, the fourth key request message may include the key identifier A-KID, the second target entity identifier and the proxy entity identifier corresponding to the first proxy entity.

In some embodiments, the fourth key request message may also include an authorization indication parameter, which may be used to instruct the third entity to determine whether the user equipment has the second communication authority with the target entity according to the fourth key request message.

In step S1214, the third entity determines whether the user equipment has the second communication authority with the target entity according to the fourth key request message.

For example, the way for the third entity to determine whether the user equipment has the second communication authority with the target entity may include one or more of the following.

Way 6: according to the key identifier A-KID and the second target entity identifier, it is determined whether the user equipment has the access authority to the target entity.

Way 7: according to the proxy entity identifier and the second target entity identifier, it is determined whether the first proxy entity has the proxy authority to the target entity.

Way 8: according to the key identifier A-KID and the second target entity identifier, it is determined whether the target entity has the acquisition authority to the user identifier of the user equipment.

In some embodiments, the third entity can determine that the user equipment has the second communication authority with the target entity, in case that it is determined that the user equipment has the access authority to the target entity and the first proxy entity has the proxy authority to the target entity.

In step S1215, the third entity sends a fourth key response message to the fourth entity.

The fourth key response message is used to inform the second entity whether the user equipment has the second communication authority with the target entity.

In some embodiments, the fourth key response message may further include the second user identifier of the user equipment, and the second user identifier may be an identifier that represents the user equipment within the domain of the 3GPP operator. For example, the second user identifier may be a subscription permanent identifier SUPI corresponding to the user equipment.

In some embodiments, the fourth key response message may also include an authorization result parameter. For example, the third entity may contain the authorization result parameter in the fourth key response message in case that it is determined whether the user equipment has the second communication authority with the target entity.

In step S1216, the second entity sends a second key response message to the first proxy entity according to the fourth key response message.

In case that the fourth key response message includes the second user identifier (such as SUPI) of the user equipment, the second entity may acquire the first user identifier (such as GPSI) according to the second user identifier (such as SUPI) and contain the first user identifier in the second key response message.

In case that the fourth key response message includes the authorization result parameter, the second entity may also include the authorization result parameter in the second key response message.

In step S1217, the first proxy entity sends the authentication result notification message to the target entity.

For example, the first proxy entity can send the authentication result notification message to the target entity according to the second key response message. For example, the first proxy entity can send the authentication result notification message to the target entity, in case that it is determined that the user equipment has the second communication authority with the target entity according to the second key response message.

In some embodiments, the second key response message may include the authorization result parameter, and the first proxy entity may determine that the user equipment has the second communication authority with the target entity according to the authorization result parameter.

In case that the second key response message includes the first user identifier (e.g., SUPI) of the user equipment, the first proxy entity may include the first user identifier in the authentication result notification message, so that the target application can acquire the identifier information of the user equipment.

In step S1218, the first proxy entity sends a target entity service response message to the user equipment.

The target entity service response message is used to indicate whether the user equipment has the second communication authority with the target entity.

For example, the first proxy entity may send the target entity service response message to the user equipment according to the second key response message. For example, the first proxy entity may send the target entity service response message to the user equipment, in case that it is determined that the user equipment has the second communication authority with the target entity according to the authorization result parameter in the second key response message.

In some embodiments, the first entity may include an untrusted application function AF entity outside the domain of the 3GPP operator or an untrusted application server SCS/AS entity outside the domain of the 3GPP operator. The first proxy entity may include an untrusted authentication proxy AP entity outside the domain of the 3GPP operator. The second entity may include a network exposure function NEF entity or a service capability exposure function SCEF entity. The third entity may include an AKMA anchor function AAnF entity.

In this way, for the untrusted first entity outside the domain of the 3GPP operator, the first proxy entity determines whether the user equipment has the communication authority with the first entity, and performs the identity authentication of the user equipment in case that the user equipment has the first communication authority, so that part of the functions of the first entity can be realized through the first proxy entity, thereby reducing the load of the first entity and improving the efficiency of the first entity. Moreover, the user equipment realizes the authority authentication and identity authentication with one or more first entities through the unified first proxy entity, which also reduces the complexity of authentication of the user equipment and improves the efficiency of the user equipment.

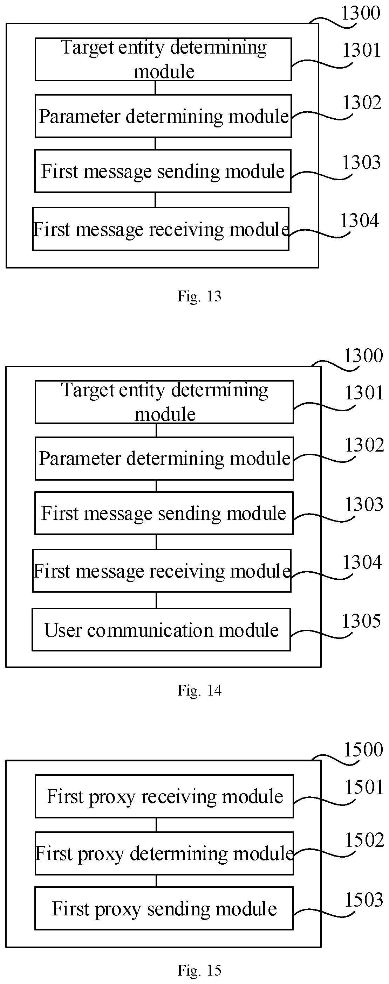

Fig. 13 is a block diagram of an authentication device 1300 according to an illustrative embodiment, which can be applied to the user equipment. As shown in Fig. 13, the device 1300 may include:
a target entity determining module 1301 configured to determine a target entity requesting communication from one or more first entities;
a parameter determining module 1302 configured to determine a first authority request parameter according to the target entity;
a first message sending module 1303 configured to send an application session establishment request message to a first proxy entity according to the first authority request parameter, in which the application session establishment request message is used to instruct the first proxy entity to determine whether the user equipment has a first communication authority with the target entity according to the first authority request parameter; the first entity includes an untrusted entity providing an application function outside a domain of a 3GPP operator, the first proxy entity includes an untrusted entity providing an authentication function outside the domain of the 3GPP operator, and the first proxy entity provides an authentication proxy function for the first entity;
a first message receiving module 1304 configured to determine whether the user equipment has the first communication authority with the target entity in response to receiving an application session establishment response message sent by the first proxy entity; and
an authentication module configured to perform identity authentication through the first proxy entity in case that the user equipment has the first communication authority with the target entity.

Optionally, the parameter determining module 1302 is configured to take a first target entity identifier of the target entity and a key identifier A-KID corresponding to the user equipment as the first authority request parameter.

Optionally, the first communication authority includes one or more of the following.

The user equipment has an access authority to the target entity.

The user equipment has an access authority to the first proxy entity.

The first proxy entity has a proxy authority to the target entity.

The target entity has an acquisition authority to the user identifier of the user equipment.

Fig. 14 is a block diagram of an authentication device 1300 according to an illustrative embodiment. As shown in Fig. 14, the device may further include:
a user communication module 1305 configured to: establish a secure session with the first proxy entity after identity authentication through the first proxy entity is successful; acquire a proxy domain name of the first proxy entity and a first domain name of the target entity; determine whether the user equipment has a second communication authority with the target entity through the secure session in case that the proxy domain name is the same as the first domain name; and communicate with the target entity in case that it is determined that the user equipment has the second communication authority with the target entity.

Optionally, the user communication module 1305 is configured to: send a target entity service request message to the first proxy entity through the secure session, in which the target entity service request message includes a second target entity identifier, which is a protected entity identifier acquired by the user equipment according to the first target entity identifier, and the target entity service request message is used for instructing the first proxy entity to determine whether the user equipment has the second communication authority with the target entity according to the second target entity identifier; and determine whether the user equipment has the second communication authority with the target entity in response to receiving a target entity service response message sent by the first proxy entity.

Optionally, the second communication authority includes one or more of the following.

The user equipment has an access authority to the target entity.

The first proxy entity has a proxy authority to the target entity.

The target entity has an acquisition authority to the user identifier of the user equipment.

Optionally, the first message receiving module 1304 is configured to: determine that the user equipment has the first communication authority with the target entity in case that the application session establishment response message is received; or, determine that the user equipment has the first communication authority with the target entity in case that the application session establishment response message is received, and the session establishment response message contains success indication information.

Optionally, the first entity includes an untrusted application function AF entity outside the domain of the 3GPP operator or an untrusted application server SCS/AS entity outside the domain of the 3GPP operator. The first proxy entity includes an untrusted authentication proxy AP entity outside the domain of the 3GPP operator.

Fig. 15 is a block diagram of an authentication device 1500 according to an illustrative embodiment, which can be applied to the first proxy entity. As shown in Fig. 15, the device 1500 may include:

a first proxy receiving module 1501 configured to receive an application session establishment request message sent by the user equipment, in which the application session establishment request message includes a first authority request parameter, the application session establishment request message is used to instruct the first proxy entity to determine whether the user equipment have a first communication authority with the target entity according to the first authority request parameter, the target entity is an entity requesting communication determined by the user equipment from one or more first entities, the first entity includes an untrusted entity providing an application function outside a domain of a 3GPP operator, the first proxy entity includes an untrusted entity providing an authentication function outside the domain of the 3GPP operator, and the first proxy entity provides an authentication proxy function for the first entity;

a first proxy determining module 1502 configured to determine whether the user equipment have the first communication authority with the target entity according to the first authority request parameter; and
a first proxy sending module 1503 configured to send an application session establishment response message to the user equipment, and performs identity authentication of the user equipment, in case that the user equipment has the first communication authority with the target entity.

Optionally, the first authority request parameter includes a first target entity identifier of the target entity and a key identifier A-KID corresponding to the user equipment.

Optionally, the first communication authority includes one or more of the following.

The user equipment has an access authority to the target entity.

The user equipment has an access authority to the first proxy entity.

The first proxy entity has a proxy authority to the target entity.

The target entity has an acquisition authority to the user identifier of the user equipment.

Optionally, the first proxy determining module 1502 is configured to: determine a second authority request parameter according to the first authority request parameter; send a first key request message to the second entity, in which the first key request message includes the second authority request parameter; receive a first key response message sent by the second entity, in which the first key response message includes first pending key information, and the first pending key information is key information acquired by the second entity according to the second authority request parameter; and determine whether the user equipment has the first communication authority with the target entity according to the first pending key information.

Optionally, the first proxy determining module 1502 is configured to take the first authority request parameter and a proxy entity identifier corresponding to the first proxy entity as the second authority request parameter.

Optionally, the first proxy determining module 1502 is configured to determine that the user equipment has the first communication authority with the target entity in case that the first pending key information includes entity key information corresponding to the target entity.

Optionally, the first proxy sending module 1503 is configured to send an authentication result notification message to the target entity in case that the identity authentication of the user equipment is successful. The authentication result notification message is used to indicate that the target entity has a communication authority with the user equipment.

Optionally, the first proxy sending module 1503 is configured to: acquire a proxy domain name of the first proxy entity and a first domain name of the target entity; and send the authentication result notification message to the target entity in case that the proxy domain name is different from the first domain name.

Optionally, the first proxy sending module 1503 is configured to send the first user identifier to the target entity through the authentication result notification message in case that the first key response message includes the first user identifier corresponding to the user equipment.

Optionally, the first user identifier is a generic public subscription identifier GPSI corresponding to the user equipment.

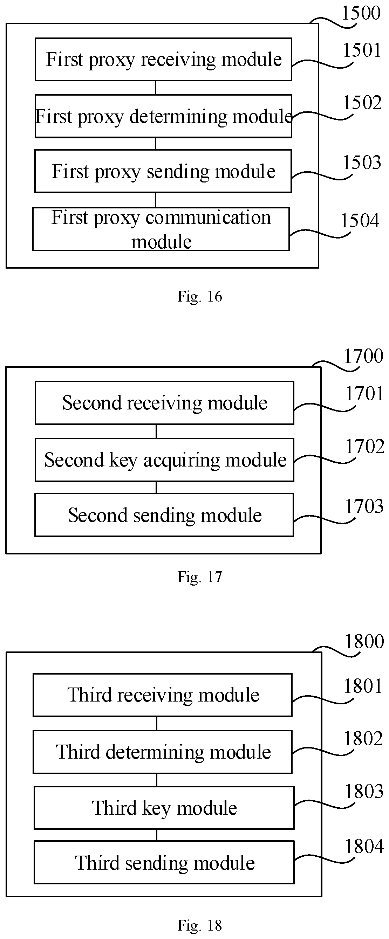

Fig. 16 is a block diagram of an authentication device 1500 according to an illustrative embodiment. As shown in Fig. 16, the device may further include:
a first proxy communication module 1504 configured to establish a secure session with the user equipment after identity authentication of the user equipment is successful; receive a target entity service request message sent by the user equipment through the secure session, in which the target entity service request message includes a second target entity identifier, the second target entity identifier is a protected entity identifier acquired by the user equipment according to the first target entity identifier of the target entity, and the target entity service request message is a message sent by the user equipment in case that it is determined that a proxy domain name of the first proxy entity is the same as a first domain name of the target entity; determine whether the user equipment has a second communication authority with the target entity according to the second target entity identifier; and send a target entity service response message to the user equipment, in which the target entity service response message is used to indicate whether the user equipment has the second communication authority with the target entity.

Optionally, the second communication authority includes one or more of the following.

The user equipment has an access authority to the target entity.

The first proxy entity has a proxy authority to the target entity.

The target entity has an acquisition authority to the user identifier of the user equipment.

Optionally, the first proxy communication module 1504 is configured to determine that the user equipment has the second communication authority with the target entity in case that the second target entity identifier is the same as the first target entity identifier.

Optionally, the first proxy communication module 1504 is configured to: send a second key request message to the second entity in case that the second target entity identifier is different from the first target entity identifier, in which the second key request message includes the key identifier A-KID, the second target entity identifier and the proxy entity identifier corresponding to the first proxy entity, and the second key request message is used to instruct the second entity to determine whether the user equipment has the second communication authority with the target entity; receive a second key response message sent by the second entity; and determine whether the user equipment has the second communication authority with the target entity according to the second key response message.

Optionally, the second key request message further includes an authorization indication parameter, and the authorization indication parameter is used to instruct the second entity to determine whether the user equipment have the second communication authority with the target entity according to the second key request message.

Optionally, the first proxy determining module 1502 is configured to send an authentication result notification message to the target entity in case that it is determined that the user equipment has the second communication authority with the target entity according to the second key response message. The authentication result notification message is used to indicate that the target entity has a communication authority with the user equipment.

Optionally, the first proxy determining module 1502 is configured to send a first user identifier to the target entity through the authentication result notification message, in case that the second key response message includes the first user identifier corresponding to the user equipment.

Optionally, the first user identifier is a generic public subscription identifier GPSI corresponding to the user equipment.

Optionally, the first pending key information includes an application key K_{AF} and a key expiration time.

Optionally, the second entity includes a network exposure function NEF entity or a service capability exposure function SCEF entity.

Optionally, the first entity includes an untrusted application function AF entity outside the domain of the 3GPP operator or an untrusted application server SCS/AS entity outside the domain of the 3GPP operator. The first proxy entity includes an untrusted authentication proxy AP entity outside the domain of the 3GPP operator.

Fig. 17 is a block diagram of an authentication device 1700 according to an illustrative embodiment, which can be applied to the second entity. As shown in Fig. 17, the device 1700 may include:
a second receiving module 1701 configured to receive a first key request message sent by a first proxy entity, in which the first key request message includes a second authority request parameter, the second authority request parameter is determined by the first proxy entity according to a first authority request parameter sent by the user equipment, the first authority request parameter is used to instruct the first proxy entity to determine whether the user equipment has a first communication authority with the target entity according to the first authority request parameter, the target entity is an entity requesting communication determined by the user equipment from one or more first entities, the first entity includes an untrusted entity providing an application function outside a domain of a 3GPP operator, the first proxy entity includes an untrusted entity providing an authentication function outside the domain of the 3GPP operator, and the first proxy entity provides an authentication proxy function for the first entity;
a second key acquiring module 1702 configured to acquire first pending key information according to the second authority request parameter; and
a second sending module 1703 configured to send a first key response message to the first proxy entity according to the first pending key information.

Optionally, the second key acquiring module 1702 is configured to determine a third authority request parameter according to the second authority request parameter; send a third key request message to a third entity according to the third authority request parameter; receive a third key response message sent by the third entity, in which the third key response message includes third pending key information, and the third pending key information is key information acquired by the third entity in case that it is determined that the user equipment has the first communication authority with the target entity according to the third authority request parameter; and acquire the first pending key information according to the third pending key information.

Optionally, the first communication authority includes one or more of the following.

The user equipment has an access authority to the target entity.

The user equipment has an access authority to the first proxy entity.

The first proxy entity has a proxy authority to the target entity.

The target entity has an acquisition authority to the user identifier of the user equipment.

Optionally, the second authority request parameter includes a key identifier A-KID corresponding to the user equipment, a first target entity identifier corresponding to the target entity and a proxy entity identifier corresponding to the first proxy entity. The second key acquiring module 1702 is configured to take the second authority request parameter as the third authority request parameter.

Optionally, the third pending key information includes entity key information corresponding to the target entity. The second key acquiring module 1702 is configured to take the entity key information corresponding to the target entity as the first pending key information.

Optionally, the entity key information includes an application key K_{AF} and a key expiration time.

Optionally, the third key response message further includes a second user identifier corresponding to the user equipment. The second sending module 1703 is configured to: determine the first user identifier according to the second user identity; and send the first key response message to the first proxy entity according to the first pending key information and the first user identifier.

Optionally, the first user identifier is a generic public subscription identifier GPSI corresponding to the user equipment. The second user identifier is a subscription permanent identifier SUPI corresponding to the user equipment.

Optionally, the second key acquiring module 1702 is configured to: receive a second key request message sent by the first proxy entity after sending the first key response message to the first proxy entity according to the first pending key information, in which the second key request message is a message sent by the first proxy entity to the second entity in case that it is determined that a second target entity identifier is different from the first target entity identifier corresponding to the target entity, and the second target entity identifier is a protected entity identifier acquired by the user equipment according to the first target entity identifier of the target entity; determine whether the user equipment has a second communication authority with the target entity according to the second key request message; and send a second key response message to the first proxy entity, in which the second key response message is used to inform the first proxy entity whether the user equipment has the second communication authority with the target entity.

Optionally, the second communication authority includes one or more of the following.

The user equipment has an access authority to the target entity.

The first proxy entity has a proxy authority to the target entity.

The target entity has an acquisition authority to the user identifier of the user equipment.

Optionally, the second key request message includes the key identifier A-KID, the second target entity identifier and the proxy entity identifier corresponding to the first proxy entity. The second key acquiring module 1702 is configured to: send a fourth key request message to the third entity, in which the fourth key request message includes the key identifier A-KID, the second target entity identifier and the proxy entity identifier; receive a fourth key response message sent by the third entity; and determine whether the user equipment has the second communication authority with the target entity according to the fourth key response message.

Optionally, both the second key request message and the fourth key request message include an authorization indication parameter, and the authorization indication parameter is used to instruct the third entity to determine whether the user equipment has the second communication authority with the target entity according to the fourth key request message.

Optionally, the third entity includes an AKMA anchor function AAnF entity.

Optionally, the first entity includes an untrusted application function AF entity outside the domain of the 3GPP operator or an untrusted application server SCS/AS entity outside the domain of the 3GPP operator. The first proxy entity includes an untrusted authentication proxy AP entity outside the domain of the 3GPP operator. The second entity includes a network exposure function NEF entity or a service capability exposure function SCEF entity.

Fig. 18 is a block diagram of an authentication device 1800 according to an illustrative embodiment, which can be applied to the third entity. As shown in Fig. 18, the device 1800 may include:
a third receiving module 1801 configured to receive a third key request message sent by the second entity, in which the third key request message includes a third authority request parameter, the third authority request parameter is a parameter determined by the second entity according to a second authority request parameter, the second authority request parameter is a parameter determined by the first proxy entity according to a first authority request parameter sent by the user equipment, the first authority request parameter is used to instruct the first proxy entity to determine whether the user equipment has a first communication authority with the target entity according to the first authority request parameter, the target entity is an entity requesting communication determined by the user equipment from one or more first entities, the first entity includes an untrusted entity providing an application function outside a domain of a 3GPP operator, the first proxy entity includes an untrusted entity providing an authentication function outside the domain of the 3GPP operator, and the first proxy entity provides an authentication proxy function for the first entity;
a third determining module 1802 configured to determine whether the user equipment has the first communication authority with the target entity according to the third authority request parameter;
a third key module 1803 configured to acquire third pending key information in case that the user equipment has the first communication authority with the target entity; and
a third sending module 1804 configured to send a third key response message to the second entity according to the third pending key information.

Optionally, the third authority request parameter includes a key identifier A-KID corresponding to the user equipment, a first target entity identifier of the target entity and a proxy entity identifier corresponding to the first proxy entity. The third determining module 1802 is configured to determine whether the user equipment has the first communication authority with the target entity through one or more of the following:
determining whether the user equipment has an access authority to the target entity according to the key identifier A-KID and the first target entity identifier;
determining whether the user equipment has an access authority to the first proxy entity according to the key identifier A-KID and the proxy entity identifier;
determining whether the first proxy entity has a proxy authority to the target entity according to the proxy entity identifier and the first target entity identifier; and
determining whether the target entity has an acquisition authority to the user identifier of the user equipment according to the key identifier A-KID and the second target entity identifier.

Optionally, the third key module 1803 is configured to acquire the third pending key information according to entity key information corresponding to the target entity.

Optionally, the third sending module 1804 is configured to send the third pending key information and the second user identifier corresponding to the user equipment to the second entity through the third key response message in case that it is determined that the target entity has an authority to acquire the user identifier.

Optionally, the second user identifier is a subscription permanent identifier SUPI corresponding to the user equipment.

Optionally, the third determining module 1802 is further configured to receive a fourth key request message sent by the second entity after sending the third key response message to the second entity; determine whether the user equipment has a second communication authority with the target entity according to the fourth key request message; and send a fourth key response message to the second entity, in which the fourth key response message is used to inform the second entity whether the user equipment has the second communication authority with the target entity.

Optionally, the fourth key request message includes a key identifier A-KID, a second target entity identifier and a proxy entity identifier corresponding to the first proxy entity, and the second target entity identifier is a protected entity identifier acquired by the user equipment according to a first target entity identifier of the target entity.

The third determining module 1802 is configured to determine whether the user equipment has the second communication authority with the target entity through one or more of the following:
determining whether the user equipment has an access authority to the target entity according to the key identifier A-KID and the second target entity identifier;
determining whether the first proxy entity has a proxy authority to the target entity according to the proxy entity identifier and the second target entity identifier; and
determining whether the target entity has an acquisition authority to the user identifier of the user equipment according to the key identifier A-KID and the second target entity identifier.

Optionally, the fourth key request message includes an authorization indication parameter, and the authorization indication parameter is used to instruct the third entity to determine whether the user equipment has the second communication authority with the target entity according to the fourth key request message.

Optionally, the third determining module 1802 is configured to send the fourth key response message to the second entity according to the second user identifier corresponding to the user equipment in case that it is determined that the target entity has the authority to acquire the user identifier.

Optionally, the second user identifier is a subscription permanent identifier SUPI corresponding to the user equipment.

Optionally, the first entity includes an untrusted application function AF entity outside the domain of the 3GPP operator or an untrusted application server SCS/AS entity outside the domain of the 3GPP operator. The first proxy entity includes an untrusted authentication proxy AP entity outside the domain of the 3GPP operator. The second entity includes a network exposure function NEF entity or a service ability exposure function SCEF entity. The third entity includes: an AKMA anchor function AAnF entity.

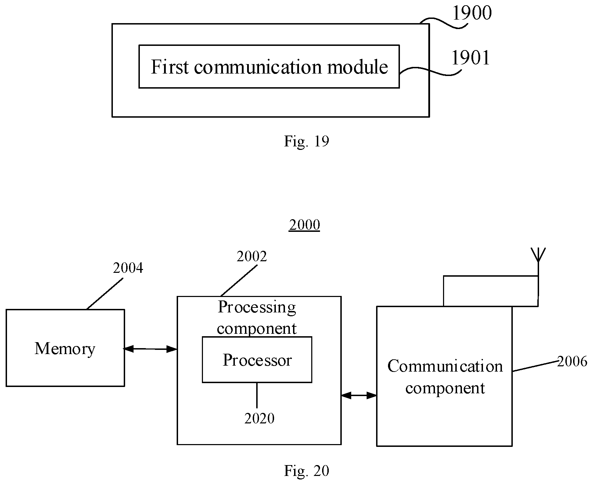

Fig. 19 is a block diagram of an authentication device 1900 according to an illustrative embodiment, which can be applied to the first entity. As shown in Fig. 19, the device 1900 may include:
a first communication module 1901 configured to communicate with the user equipment in response to receiving an authentication result notification message sent by the first proxy entity, in which the authentication result notification message is used to indicate that the target entity has a communication authority with the user equipment, the first proxy entity is connected with the first entity, and both the first entity and the first proxy entity are untrusted function entities outside a domain of a 3GPP operator.

Optionally, the authentication result notification message includes a first user identifier of the user equipment.

Optionally, the first user identifier is a generic public subscription identifier GPSI corresponding to the user equipment.

Optionally, the first entity includes an untrusted application function AF entity outside the domain of the 3GPP operator or an untrusted application server SCS/AS entity outside the domain of the 3GPP operator. The first proxy entity includes an untrusted authentication proxy AP entity outside the domain of the 3GPP operator.

With regard to the devices in the above embodiments, the specific way in which each module performs operations has been described in detail in the embodiments of the methods, and will not be described in detail here.

Fig. 20 is a block diagram of an authentication device according to an illustrative embodiment. For example, the authentication device 2000 can be a terminal device, such as a mobile phone, a computer, a digital broadcasting terminal, a messaging device, a game console, a tablet device, a medical device, a fitness device, a personal digital assistant, etc. The authentication device 2000 may also be a server, such as a local server or a cloud server. The authentication device 2000 can also be the user equipment shown in Fig. 1, and the authentication device 2000 can also be any network entity in the communication system shown in Fig. 1, such as the first entity, the first proxy entity, the second entity or the third entity.

Referring to Fig. 20, the device 2000 may include one or more of the following components: a processing component 2002, a memory 2004, and a communication component 2006.

The processing component 2002 generally controls the overall operation of the device 2000, such as operations associated with display, telephone call, data communication, camera operation and recording operation. The processing component 2002 may include one or more processors 2020 to execute instructions so as to complete all or part of the steps of the authentication methods described above. In addition, the processing component 2002 can include one or more modules to facilitate the interaction between the processing component 2002 and other components. For example, the processing component 2002 can include a multimedia module to facilitate the interaction between the multimedia component and the processing component 2002.

The memory 2004 is configured to store various types of data to support operations in the device 2000. Examples of these data include instructions for any application or method operating on the device 2000, contact data, phone book data, messages, pictures, videos, and the like. The memory 2004 can be realized by any type of volatile or nonvolatile memory device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The communication component 2006 is configured to facilitate wired or wireless communication between the device 2000 and other devices. The device 2000 can access a wireless network based on communication standards, such as WiFi, 2G or 3G, or a combination thereof. In an illustrative embodiment, the communication component 2006 receives a broadcast signal or broadcast related information from an external broadcast management system via a broadcast channel. In an illustrative embodiment, the communication component 2006 further includes a near field communication (NFC) module to facilitate short-range communication. For example, the NFC module can be implemented based on the radio frequency identification (RFID) technology, the infrared data association (IrDA) technology, the ultra-wideband (UWB) technology, the Bluetooth (BT) technology and other technologies.

In an illustrative embodiment, the device 2000 may be implemented by one or more application-specific integrated circuits (ASIC), digital signal processors (DSP), digital signal processing devices (DSPD), programmable logic devices (PLD), field programmable gate arrays (FPGA), controllers, microcontrollers, microprocessors or other electronic components, for performing the above authentication methods.

The device 2000 can be not only an independent electronic device, but also a part of an independent electronic device. For example, in an embodiment, the electronic device can be an Integrated Circuit (IC) or a chip, where the integrated circuit can be one IC or a collection of a plurality of ICs. The chip may include, but is not limited to, the following types: a Graphics Processing Unit (GPU), Central Processing Unit (CPU), a Field Programmable Gate Array (FPGA), a Digital Signal Processor (DSP), an Application Specific Integrated Circuit (ASIC), a System on Chip (SOC), etc. The integrated circuit or chip can be used to execute executable instructions (or codes) to realize the authentication methods. The executable instructions can be stored in the integrated circuit or chip, and can also be acquired from other devices or apparatuses. For example, the integrated circuit or chip includes a processor, a memory, and an interface for communicating with other devices. The executable instruction can be stored in the processor, and when the executable instructions are executed by the processor, the above authentication methods are realized. Alternatively, the integrated circuit or chip can receive the executable instructions through the interface and transmit them to the processor for execution, so as to realize the above authentication methods.

In an illustrative embodiment, there is also provided a non-transitory computer-readable storage medium including instructions, such as the memory 2004 including instructions, and the instructions can be executed by the processor 2020 of the device 2000 to complete the above authentication methods. For example, the non-transitory computer-readable storage medium can be a ROM, a random access memory (RAM), a CD-ROM, a magnetic tape, a floppy disk, an optical data storage device, etc.

In another illustrative embodiment, there is also provided a computer program product including a computer program executable by a programmable device, and the computer program has code portions for executing the above authentication methods when executed by the programmable device.

Other embodiments of the present disclosure will easily occur to those skilled in the art after considering the specification and practicing the present disclosure. The present disclosure is intended to cover any variations, uses or adaptations of the present disclosure, which follow the general principles of the present disclosure and include common sense or common technical means in the related art that are not disclosed in the present disclosure. The specification and embodiments are to be regarded as illustrative only, with the true scope and spirit of the present disclosure being indicated by the following claims.

It should be understood that the present disclosure is not limited to the precise structure described above and shown in the drawings, and various modifications and changes can be made without departing from the scope of the present disclosure. The scope of the present disclosure is limited only by the appended claims.

## Claims

1. An authentication method, applied to a user equipment, and comprising:
determining a target entity requesting communication from one or more first entities;
determining a first authority request parameter according to the target entity;
sending an application session establishment request message to a first proxy entity according to the first authority request parameter, wherein the application session establishment request message is configured to instruct the first proxy entity to determine whether the user equipment has a first communication authority with the target entity according to the first authority request parameter, the first entity comprises an untrusted entity providing an application function outside a domain of a 3GPP operator, the first proxy entity comprises an untrusted entity providing an authentication function outside the domain of the 3GPP operator, and the first proxy entity provides an authentication proxy function for the first entity;
determining whether the user equipment has the first communication authority with the target entity in response to receiving an application session establishment response message sent by the first proxy entity; and
in case that the user equipment has the first communication authority with the target entity, performing identity authentication through the first proxy entity.

2. The method according to claim 1, wherein determining the first authority request parameter according to the target entity comprises:
taking a first target entity identifier of the target entity and a key identifier A-KID corresponding to the user equipment as the first authority request parameter.

3. The method according to claim 1, wherein the first communication authority comprises one or more of the following:
the user equipment having an access authority to the target entity;
the user equipment having an access authority to the first proxy entity;
the first proxy entity having a proxy authority to the target entity; and
the target entity having an acquisition authority to a user identifier of the user equipment.

4. The method according to claim 1, wherein after the identity authentication through the first proxy entity is successful, the method further comprises:
establishing a secure session with the first proxy entity;
acquiring a proxy domain name of the first proxy entity and a first domain name of the target entity;
determining whether the user equipment has a second communication authority with the target entity through the secure session in case that the proxy domain name is the same as the first domain name; and
communicating with the target entity in case that it is determined that the user equipment has the second communication authority with the target entity.

5. The method according to claim 4, wherein determining whether the user equipment has the second communication authority with the target entity through the secure session comprises:
sending a target entity service request message to the first proxy entity through the secure session, wherein the target entity service request message comprises a second target entity identifier, the second target entity is a protected entity identifier acquired by the user equipment according to the first target entity identifier, and the target entity service request message is configured to instruct the first proxy entity to determine whether the user equipment has the second communication authority with the target entity according to the second target entity identifier; and
determining whether the user equipment has the second communication authority with the target entity in response to receiving the target entity service response message sent by the first proxy entity.

6. The method according to claim 4, wherein the second communication authority comprises one or more of the following:
the user equipment having an access authority to the target entity;
the first proxy entity having a proxy authority to the target entity; and
the target entity having an acquisition authority to a user identifier of the user equipment.

7. The method according to claim 1, wherein in response to receiving the application session establishment response message sent by the first proxy entity, determining whether the user equipment has the first communication authority with the target entity comprises:
determining that the user equipment has the first communication authority with the target entity in case that the application session establishment response message is received; or
determining that the user equipment has the first communication authority with the target entity, in case that the application session establishment response message is received and the session establishment response message contains success indication information.

8. The method according to any one of claims 1-7, wherein the first entity comprises an untrusted application function AF entity outside the domain of the 3GPP operator or an untrusted application server SCS/AS entity outside the domain of the 3GPP operator, and the first proxy entity comprises an untrusted authentication proxy AP entity outside the domain of the 3GPP operator.

9. An authentication method, applied to a first proxy entity, and comprising:
receiving an application session establishment request message sent by a user equipment, wherein the application session establishment request message comprises a first authority request parameter, and the application session establishment request message is configured to instruct the first proxy entity to determine whether the user equipment has a first communication authority with a target entity according to the first authority request parameter, wherein the target entity is an entity requesting communication determined by the user equipment from one or more first entities, the first entity comprises an untrusted entity providing an application function outside a domain of a 3GPP operator, the first proxy entity comprises an untrusted entity providing an authentication function outside the domain of the 3GPP operator, and the first proxy entity provides an authentication proxy function for the first entity;
determining whether the user equipment has the first communication authority with the target entity according to the first authority request parameter; and
in case that the user equipment has the first communication authority with the target entity, sending an application session establishment response message to the user equipment, and performing identity authentication of the user equipment.

10. The method according to claim 9, wherein the first authority request parameter comprises a first target entity identifier of the target entity and a key identifier A-KID corresponding to the user equipment.

11. The method according to claim 9, wherein the first communication authority comprises one or more of the following:
the user equipment having an access authority to the target entity;
the user equipment having an access authority to the first proxy entity;
the first proxy entity having a proxy authority to the target entity; and
the target entity having an acquisition authority to a user identifier of the user equipment.

12. The method according to claim 9, wherein determining whether the user equipment has the first communication authority with the target entity according to the first authority request parameter comprises:
determining a second authority request parameter according to the first authority request parameter;
sending a first key request message to a second entity, wherein the first key request message comprises the second authority request parameter, and the second entity comprises a network exposure function entity;
receiving a first key response message sent by the second entity, wherein the first key response message comprises first pending key information, and the first pending key information is key information acquired by the second entity according to the second authority request parameter; and
determining whether the user equipment has the first communication authority with the target entity according to the first pending key information.

13. The method according to claim 12, wherein determining the second authority request parameter according to the first authority request parameter comprises:
taking the first authority request parameter and a proxy entity identifier corresponding to the first proxy entity as the second authority request parameter.

14. The method according to claim 12, wherein determining whether the user equipment has the first communication authority with the target entity according to the first pending key information comprises:
determining that the user equipment has the first communication authority with the target entity in case that the first pending key information comprises entity key information corresponding to the target entity.

15. The method according to claim 12, wherein in case that the identity authentication of the user equipment is successful, the method further comprises:
sending an authentication result notification message to the target entity, wherein the authentication result notification message is configured to indicate that the target entity has a communication authority with the user equipment.

16. The method according to claim 15, wherein sending the authentication result notification message to the target entity comprises:
acquiring a proxy domain name of the first proxy entity and a first domain name of the target entity; and
sending the authentication result notification message to the target entity in case that the proxy domain name is different from the first domain name.

17. The method according to claim 15, wherein sending the authentication result notification message to the target entity comprises:
in case that the first key response message comprises a first user identifier corresponding to the user equipment, sending the first user identifier to the target entity through the authentication result notification message.

18. The method according to claim 17, wherein the first user identifier is a generic public subscription identifier GPSI corresponding to the user equipment.

19. The method according to claim 9, wherein after the identity authentication of the user equipment is successful, the method further comprises:
establishing a secure session with the user equipment;
receiving a target entity service request message sent by the user equipment through the secure session, wherein the target entity service request message comprises a second target entity identifier, the second target entity identifier is a protected entity identifier acquired by the user equipment according to the first target entity identifier of the target entity, and the target entity service request message is a message sent by the user equipment in case that it is determined that a proxy domain name of the first proxy entity is the same as a first domain name of the target entity;
determining whether the user equipment has a second communication authority with the target entity according to the second target entity identifier; and
sending a target entity service response message to the user equipment, wherein the target entity service response message is configured to indicate whether the user equipment has the second communication authority with the target entity.

20. The method according to claim 19, wherein the second communication authority comprises one or more of the following:
the user equipment having a access authority to the target entity;
the first proxy entity having a proxy authority to the target entity; and
the target entity having an acquisition authority to a user identifier of the user equipment.

21. The method according to claim 19, wherein determining whether the user equipment has the second communication authority with the target entity according to the second target entity identifier comprises:
determining that the user equipment has the second communication authority with the target entity in case that the second target entity identifier is the same as the first target entity identifier.

22. The method according to claim 19, wherein determining whether the user equipment has the second communication authority with the target entity according to the second target entity identifier comprises:
sending a second key request message to a second entity in case that the second target entity identifier is different from the first target entity identifier, wherein the second key request message comprises a key identifier A-KID, the second target entity identifier and a proxy entity identifier corresponding to the first proxy entity, and the second key request message is configured to instruct the second entity to determine whether the user equipment has the second communication authority with the target entity;
receiving a second key response message sent by the second entity; and
determining whether the user equipment has the second communication authority with the target entity according to the second key response message.

23. The method according to claim 22, wherein the second key request message further comprises an authorization indication parameter, and the authorization indication parameter is configured to instruct the second entity to determine whether the user equipment has the second communication authority with the target entity according to the second key request message.

24. The method according to claim 22, wherein in case that it is determined that the user equipment has the second communication authority with the target entity according to the second key response message, the method further comprises:
sending an authentication result notification message to the target entity, wherein the authentication result notification message is configured to indicate that the target entity has a communication authority with the user equipment.

25. The method according to claim 24, wherein sending the authentication result notification message to the target entity comprises:
in case that the second key response message comprises a first user identifier corresponding to the user equipment, sending the first user identifier to the target entity through the authentication result notification message.

26. The method according to claim 25, wherein the first user identifier is a generic public subscription identifier GPSI corresponding to the user equipment.

27. The method according to claim 12, wherein the first pending key information comprises an application key K_{AF} and a key expiration time.

28. The method according to claim 12, wherein the second entity comprises a network exposure function NEF entity or a service capability exposure function SCEF entity.

29. The method according to any one of claims 9-28, wherein the first entity comprises an untrusted application function AF entity outside the domain of the 3GPP operator or an untrusted application server SCS/AS entity outside the domain of the 3GPP operator, and the first proxy entity comprises an untrusted authentication proxy AP entity outside the domain of the 3GPP operator.

30. An authentication method, applied to a second entity, and comprising:
receiving a first key request message sent by a first proxy entity, wherein the first key request message comprises a second authority request parameter, the second authority request parameter is a parameter determined by the first proxy entity according to a first authority request parameter sent by a user equipment, and the first authority request parameter is configured to instruct the first proxy entity to determine whether the user equipment has a first communication authority with a target entity according to the first authority request parameter, wherein the target entity is an entity requesting communication determined by the user equipment from one or more first entities, the first entity comprises an untrusted entity providing an application function outside a domain of a 3GPP operator, the first proxy entity comprises an untrusted entity providing an authentication function outside the domain of the 3GPP operator, and the first proxy entity provides an authentication proxy function for the first entity;
acquiring first pending key information according to the second authority request parameter; and
sending a first key response message to the first proxy entity according to the first pending key information.

31. The method according to claim 30, wherein acquiring the first pending key information according to the second authority request parameter comprises:
determining a third authority request parameter according to the second authority request parameter;
sending a third key request message to a third entity according to the third authority request parameter, wherein the third entity comprises an entity providing an AKMA authorization and an application key deduction function;
receiving a third key response message sent by the third entity, wherein the third key response message comprises third pending key information, the third pending key information is key information acquired by the third entity in case that it is determined that the user equipment has the first communication authority with the target entity according to the third authority request parameter; and
acquiring the first pending key information according to the third pending key information.

32. The method according to claim 31, wherein the first communication authority comprises one or more of the following:
the user equipment having an access authority to the target entity;
the user equipment having an access authority to the first proxy entity;
the first proxy entity having a proxy authority to the target entity; and
the target entity having an acquisition authority to a user identifier of the user equipment.

33. The method according to claim 31, wherein the second authority request parameter comprises a key identifier A-KID corresponding to the user equipment, a first target entity identifier corresponding to the target entity and a proxy entity identifier corresponding to the first proxy entity, and determining the third authority request parameter according to the second authority request parameter comprises:
taking the second authority request parameter as the third authority request parameter.

34. The method according to claim 31, wherein the third pending key information comprises entity key information corresponding to the target entity, and acquiring the first pending key information according to the third pending key information comprises:
taking the entity key information corresponding to the target entity as the first pending key information.

35. The method according to claim 34, wherein the entity key information comprises an application key K_{AF} and a key expiration time.

36. The method according to claim 31, wherein the third key response message further comprises a second user identifier corresponding to the user equipment, and sending the first key response message to the first proxy entity according to the first pending key information comprises:
determining a first user identifier according to the second user identifier; and
sending the first key response message to the first proxy entity according to the first pending key information and the first user identifier.

37. The method according to claim 36, wherein the first user identifier is a generic public subscription identifier GPSI corresponding to the user equipment, and the second user identifier is a subscription permanent identifier SUPI corresponding to the user equipment.

38. The method according to claim 30, wherein after sending the first key response message to the first proxy entity according to the first pending key information, the method further comprises:
receiving a second key request message sent by the first proxy entity, wherein the second key request message is a message sent by the first proxy entity to the second entity in case that it is determined that a second target entity identifier is different from a first target entity identifier corresponding to the target entity, and the second target entity identifier is a protected entity identifier acquired by the user equipment according to the first target entity identifier of the target entity;
determining whether the user equipment has a second communication authority with the target entity according to the second key request message; and
sending a second key response message to the first proxy entity, wherein the second key response message is configured to inform the first proxy entity whether the user equipment has the second communication authority with the target entity.

39. The method according to claim 38, wherein the second communication authority comprises one or more of the following:
the user equipment having an access authority to the target entity;
the first proxy entity having a proxy authority to the target entity; and
the target entity having an acquisition authority to a user identifier of the user equipment.

40. The method according to claim 38, wherein the second key request message comprises a key identifier A-KID, the second target entity identifier and a proxy entity identifier corresponding to the first proxy entity, and determining whether the user equipment has the second communication authority with the target entity according to the second key request message comprises:
sending a fourth key request message to a third entity, wherein the fourth key request message comprises the key identifier A-KID, the second target entity identifier and the proxy entity identifier;
receiving a fourth key response message sent by the third entity; and
determining whether the user equipment has the second communication authority with the target entity according to the fourth key response message.

41. The method according to claim 40, wherein the second key request message and the fourth key request message both comprise an authorization indication parameter, and the authorization indication parameter is configured to instruct the third entity to determine whether the user equipment has the second communication authority with the target entity according to the fourth key request message.

42. The method according to claim 31, wherein the third entity comprises an AKMA anchor function AAnF entity.

43. The method according to any one of claims 30-42, wherein the first entity comprises an untrusted application function AF entity outside the domain of the 3GPP operator or an untrusted application server SCS/AS entity outside the domain of the 3GPP operator, the first proxy entity comprises an untrusted authentication proxy AP entity outside the domain of the 3GPP operator, and the second entity comprises a network exposure function NEF entity or a service capability exposure function SCEF entity.

44. An authentication method, applied to a third entity, and comprising:
receiving a third key request message sent by a second entity, wherein the third key request message comprises a third authority request parameter, the third authority request parameter is a parameter determined by the second entity according to a second authority request parameter, the second authority request parameter is a parameter determined by a first proxy entity according to a first authority request parameter sent by a user equipment, the first authority request parameter is configured to instruct the first proxy entity to determine whether the user equipment has a first communication authority with a target entity according to the first authority request parameter, the target entity is an entity requesting communication determined by the user equipment from one or more first entities, the first entity comprises an untrusted entity providing an application function outside a domain of a 3GPP operator, the first proxy entity comprises an untrusted entity providing an authentication function outside the domain of the 3GPP operator, and the first proxy entity provides an authentication proxy function for the first entity;
determining whether the user equipment has the first communication authority with the target entity according to the third authority request parameter;
acquiring third pending key information in case that the user equipment has the first communication authority with the target entity; and
sending a third key response message to the second entity according to the third pending key information, wherein the third key response message comprises the third pending key information.

45. The method according to claim 44, wherein the third authority request parameter comprises a key identifier A-KID corresponding to the user equipment, a first target entity identifier of the target entity and a proxy entity identifier corresponding to the first proxy entity, and determining whether the user equipment has the first communication authority with the target entity according to the third authority request parameter comprises one or more of the following:
determining whether the user equipment has an access authority to the target entity according to the key identifier A-KID and the first target entity identifier;
determining whether the user equipment has an access authority to the first proxy entity according to the key identifier A-KID and the proxy entity identifier;
determining whether the first proxy entity has a proxy authority to the target entity according to the proxy entity identifier and the first target entity identifier; and
determining whether the target entity has an acquisition authority to a user identifier of the user equipment according to the key identifier A-KID and the second target entity identifier.

46. The method according to claim 44, wherein acquiring the third pending key information comprises:
acquiring the third pending key information according to entity key information corresponding to the target entity.

47. The method according to claim 44, wherein sending the third key response message to the second entity according to the third pending key information comprises:
sending the third pending key information and a second user identifier corresponding to the user equipment to the second entity through the third key response message in case that it is determined that the target entity has an authority to acquire a user identifier.

48. The method according to claim 47, wherein the second user identifier is a subscription permanent identifier SUPI corresponding to the user equipment.

49. The method according to claim 44, wherein after sending the third key response message to the second entity, the method further comprises:
receiving a fourth key request message sent by the second entity;
determining whether the user equipment has a second communication authority with the target entity according to the fourth key request message; and
sending a fourth key response message to the second entity, wherein the fourth key response message is configured to inform the second entity whether the user equipment has the second communication authority with the target entity.

50. The method according to claim 49, wherein the fourth key request message comprises a key identifier A-KID, a second target entity identifier and a proxy entity identifier corresponding to the first proxy entity, wherein the second target entity identifier is a protected entity identifier acquired by the user equipment according to a first target entity identifier of the target entity, and determining whether the user equipment has the second communication authority with the target entity according to the fourth key request message comprises one or more of the following:
determining whether the user equipment has an access authority to the target entity according to the key identifier A-KID and the second target entity identifier;
determining whether the first proxy entity has a proxy authority to the target entity according to the proxy entity identifier and the second target entity identifier; and
determining whether the target entity has an acquisition authority to a user identifier of the user equipment according to the key identifier A-KID and the second target entity identifier.

51. The method according to claim 49, wherein the fourth key request message comprises an authorization indication parameter, and the authorization indication parameter is configured to instruct the third entity to determine whether the user equipment has the second communication authority with the target entity according to the fourth key request message.

52. The method according to claim 49, wherein sending the fourth key response message to the second entity comprises:
in case that it is determined that the target entity has an authority to acquire a user identifier, sending the fourth key response message to the second entity according to a second user identifier corresponding to the user equipment.

53. The method according to claim 52, wherein the second user identifier is a subscription permanent identifier SUPI corresponding to the user equipment.

54. The method according to claim 49, wherein before determining whether the user equipment has the second communication authority with the target entity according to the fourth key request message, the method further comprises:
determining whether the third entity has an authority to serve the first proxy entity according to a preset strategy; and
determining whether the user equipment has the second communication authority with the target entity according to the fourth key request message comprises:
determining whether the user equipment has the second communication authority with the target entity according to the fourth key request message in case that the third entity has the authority to serve the first proxy entity.

55. The method according to claim 44, wherein before determining whether the user equipment has the first communication authority with the target entity according to the third authority request parameter, the method further comprises:
determining whether the third entity has an authority to serve the first proxy entity according to a preset strategy; and
determining whether the user equipment has the first communication authority with the target entity according to the third authority request parameter comprises:
determining whether the user equipment has the first communication authority with the target entity according to the third authority request parameter in case that the third entity has the authority to serve the first proxy entity.

56. The method according to any one of claims 44-55, wherein the first entity comprises an untrusted application function AF entity outside the domain of the 3GPP operator or an untrusted application server SCS/AS entity outside the domain of the 3GPP operator, the first proxy entity comprises an untrusted authentication proxy AP entity outside the domain of the 3GPP operator, the second entity comprises a network exposure function NEF entity or a service capability exposure function SCEF entity, and the third entity comprises an AKMA anchor function AAnF entity.

57. An authentication method, applied to a first entity, wherein one or more first entities are arranged, and the method comprises:
communicating with a user equipment in response to receiving an authentication result notification message sent by a first proxy entity, wherein the authentication result notification message is configured to indicate that a target entity has a communication authority with the user equipment, the first entity comprises an untrusted entity providing an application function outside a domain of a 3GPP operator, and the first proxy entity comprises an untrusted entity providing an authentication function outside the domain of the 3GPP operator, and provides an authentication proxy function for the first entity.

58. The method according to claim 57, wherein the authentication result notification message comprises a first user identifier of the user equipment.

59. The method according to claim 58, wherein the first user identifier is a generic public subscription identifier GPSI corresponding to the user equipment.

60. The method according to any one of claims 57-59, wherein the first entity comprises an untrusted application function AF entity outside the domain of the 3GPP operator or an untrusted application server SCS/AS entity outside the domain of the 3GPP operator, and the first proxy entity comprises an untrusted authentication proxy AP entity outside the domain of the 3GPP operator.

61. An authentication device, applied to a user equipment, and comprising:
a target entity determining module configured to determine a target entity requesting communication from one or more first entities;
a parameter determining module configured to determine a first authority request parameter according to the target entity;
a first message sending module configured to send an application session establishment request message to a first proxy entity according to the first authority request parameter, wherein the application session establishment request message is configured to instruct the first proxy entity to determine whether the user equipment has a first communication authority with the target entity according to the first authority request parameter, the first entity comprises an untrusted entity providing an application function outside a domain of a 3GPP operator, the first proxy entity comprises an untrusted entity providing an authentication function outside the domain of the 3GPP operator, and the first proxy entity provides an authentication proxy function for the first entity;
a first message receiving module configured to determine whether the user equipment has the first communication authority with the target entity in response to receiving an application session establishment response message sent by the first proxy entity; and
an authentication module configured to perform identity authentication through the first proxy entity in case that the user equipment has the first communication authority with the target entity.

62. An authentication device, applied to a first proxy entity, and comprising:
a first proxy receiving module configured to receive an application session establishment request message sent by a user equipment, wherein the application session establishment request message comprises a first authority request parameter, the application session establishment request message is configured to instruct the first proxy entity to determine whether the user equipment has a first communication authority with a target entity according to the first authority request parameter, the target entity is an entity requesting communication determined by the user equipment from one or more first entities, the first entity comprises an untrusted entity providing an application function outside a domain of a 3GPP operator, the first proxy entity comprises an untrusted entity providing an authentication function outside the domain of the 3GPP operator, and the first proxy entity provides an authentication proxy function for the first entity;
a first proxy determining module configured to determine whether the user equipment has the first communication authority with the target entity according to the first authority request parameter; and
a first proxy sending module configured to send an application session establishment response message to the user equipment, and perform identity authentication of the user equipment in case that the user equipment has the first communication authority with the target entity.

63. An authentication device, applied to a second entity, and comprising:
a second receiving module configured to receive a first key request message sent by a first proxy entity, wherein the first key request message comprises a second authority request parameter, the second authority request parameter is a parameter determined by the first proxy entity according to a first authority request parameter sent by a user equipment, the first authority request parameter is configured to instruct the first proxy entity to determine whether the user equipment has a first communication authority with a target entity according to the first authority request parameter, the target entity is an entity requesting communication determined by the user equipment from one or more first entities, the first entity comprises an untrusted entity providing an application function outside a domain of a 3GPP operator, the first proxy entity comprises an untrusted entity providing an authentication function outside the domain of the 3GPP operator, and the first proxy entity provides an authentication proxy function for the first entity;
a second key acquiring module configured to acquire first pending key information according to the second authority request parameter; and
a second sending module configured to send a first key response message to the first proxy entity according to the first pending key information.

64. An authentication device, applied to a third entity, and comprising:
a third receiving module configured to receive a third key request message sent by a second entity, wherein the third key request message comprises a third authority request parameter, the third authority request parameter is a parameter determined by the second entity according to a second authority request parameter, the second authority request parameter is a parameter determined by a first proxy entity according to a first authority request parameter sent by a user equipment, the first authority request parameter is configured to instruct the first proxy entity to determine whether the user equipment has a first communication authority with a target entity according to the first authority request parameter, the target entity is an entity requesting communication determined by the user equipment from one or more first entities, the first entity comprises an untrusted entity providing an application function outside a domain of a 3GPP operator, the first proxy entity comprises an untrusted entity providing an authentication function outside the domain of the 3GPP operator, and the first proxy entity provides an authentication proxy function for the first entity;
a third determining module configured to determine whether the user equipment has the first communication authority with the target entity according to the third authority request parameter;
a third key module configured to acquire third pending key information in case that the user equipment has the first communication authority with the target entity; and
a third sending module configured to send a third key response message to the second entity according to the third pending key information, wherein the third key response message comprises the third pending key information.

65. An authentication device, applied to a first entity, and comprising:
a first communication module configured to communicate with a user equipment in response to receiving an authentication result notification message sent by a first proxy entity, wherein the authentication result notification message is configured to indicate that a target entity has a communication authority with the user equipment, the first entity comprises an untrusted entity providing an application function outside a domain of a 3GPP operator, the first proxy entity comprises an untrusted entity providing an authentication function outside the domain of the 3GPP operator, and the first proxy entity provides an authentication proxy function for the first entity.

66. An authentication device, comprising:
a processor; and
a memory for storing instructions executable by the processor,
wherein the processor is configured to perform the steps of the method according to any one of claims 1-8, or the processor is configured to perform the steps of the method according to any one of claims 9-29, or the processor is configured to perform the steps of the method according to any one of claims 30-43, or the processor is configured to perform the steps of the method according to any one of claims 44-56, or the processor is configured to perform the steps of the method according to any one of claims 57-60.

67. A computer-readable storage medium, storing computer program instructions thereon, wherein the computer program instructions are configured to, when executed by a processor, realize the steps of the method according to any one of claims 1-8, or the computer program instructions are configured to, when executed by a processor, realize the steps of the method according to any one of claims 9-29, or the computer program instructions are configured to, when executed by a processor, realize the steps of the method according to any one of claims 30-43, or the computer program instructions are configured to, when executed by a processor, realize the steps of the method according to any one of claims 44-56, or the computer program instructions are configured to, when executed by a processor, realize the steps of the method according to any one of claims 57-60.

68. A chip, comprising a processor and an interface, wherein the processor is configured to read instructions to perform the steps of the method according to any one of claims 1-8, or the processor is configured to read instructions to perform the steps of the method according to any one of claims 9-29, or the processor is configured to read instructions to perform the steps of the method according to any one of claims 30-43, or the processor is configured to read instructions to perform the steps of the method according to any one of claims 44-56, or the processor is configured to read instructions to perform the steps of the method according to any one of claims 57-60.
